# FASCICULE DE BREVET EUROPEEN

(11) **EP 3 976 347 B1**
(45) Date de publication et mention de la délivrance du brevet: **27.08.2025**
(21) Numéro de dépôt: 20728074.4
(22) Date de dépôt: 29.05.2020
(51) Int. Cl.: B29C 64/124, B33Y 10/00, B33Y 70/00, C08L 83/06

(54) **MÉTHODE DE FABRICATION ADDITIVE POUR PRODUIRE UN ARTICLE EN ÉLASTOMÈRE SILICONE**
GENERATIVES FERTIGUNGSVERFAHREN ZUR HERSTELLUNG EINES SILIKONELASTOMERARTIKELS
ADDITIVE MANUFACTURING METHOD FOR PRODUCING A SILICONE ELASTOMER ARTICLE

(30) Priorité: 29.05.2019 FR 1905722
(43) Date de publication de la demande: 06.04.2022
(73) Titulaire: Elkem Silicones France SAS, 69003 Lyon (FR)
(72) Inventeur: MULLER, Mickael, 67850 OFFENDORF (FR); FRANCES, Jean-Marc, 69330 MEYZIEU (FR); THEIL, Perrine, 69780 SAINT-PIERRE DE CHANDIEU (FR); MEFFRE, Geoffray, 69007 LYON (FR)
(74) Mandataire: Plasseraud IP
(86) Numéro de dépôt international: PCT/EP2020/064985
(87) Numéro de publication internationale: WO 2020/239982

(56) Documents cités:
- WO-A1-02/42388
- US-A1- 2008 176 086
- DATABASE WPI Week 201367, Derwent World Patents Index; AN 2013-N66336, XP002797855
- DATABASE WPI Week 201862, Derwent World Patents Index; AN 2018-54515T, XP002799386

## Description

### Domaine technique

L'invention concerne une méthode de fabrication additive par photopolymérisation en cuve pour produire un article en élastomère silicone. En particulier, l'invention concerne une méthode de fabrication additive par photopolymérisation en cuve pour produire un article en élastomère silicone à partir d'une composition silicone photoréticulable. L'invention concerne également une composition silicone photoréticulable.

### Arrière-plan technologique

De nos jours, la fabrication additive connait une dynamique très forte et possède un potentiel de croissance phénoménal de par la multitude d'applications commerciales possibles. Pour permettre la généralisation de son utilisation, il est primordial d'élargir la gamme des matériaux que l'on peut utiliser avec une machine de fabrication additive.

En particulier, le silicone comme matériau d'impression est l'un des matériaux les plus prometteurs pour la fabrication additive en raison de ses nombreux avantages tels que sa flexibilité, sa biocompatibilité, ses propriétés isolantes pour les composants électriques et électroniques, et sa bonne résistance chimique, à la température et aux intempéries.

Parmi les techniques de fabrication additive, on peut citer la photopolymérisation en cuve. Cette technique permet de fabriquer un objet par couches successives, chaque couche représentant une coupe transversale de l'objet à fabriquer. Elle est basée sur l'utilisation d'une source d'irradiation qui permet de réticuler sélectivement aux endroits souhaités, une composition photoréticulable qui se trouve dans une cuve. La composition va alors se solidifier pour former une fine couche réticulée, et l'objet peut être fabriqué par superposition de plusieurs couches réticulées.

Différents procédés sont utilisés pour la photopolymérisation en cuve, comme l'impression par stéréolithographie laser (SLA), l'impression 3D par traitement numérique de la lumière (DLP) et la production par interface de liquide continu (CLIP).

Le procédé SLA est basé sur l'utilisation d'un laser comme source d'irradiation. Le laser est focalisé à la surface de la composition photoréticulable et trace une coupe transversale de l'objet 3D. En général, ce sont deux moteurs appelés galvanomètres, l'un sur l'axe X et l'autre sur l'axe Y, fonctionnant à grande vitesse, qui vont diriger le rayon laser sur la zone d'impression, solidifiant ainsi la composition sur son passage. Dans ce procédé, l'objet est décomposé en séries de points et de lignes, couche par couche. Cette technique est par exemple décrite dans le document WO2015/197495,

Dans le procédé DLP, c'est un projecteur à écran numérique qui va projeter une seule image de chaque couche sur l'ensemble de la surface de la composition photoréticulable. Comme le projecteur est à écran numérique, l'image de chaque couche est un ensemble de pixels carrés, chaque couche étant alors composée de petites briques rectangulaires appelées voxels. Cette technique est par exemple décrite dans le document WO2016/181149. Le procédé DLP permet d'obtenir des temps d'impression plus rapides pour certaines pièces, car chaque couche est exposée en une seule fois au lieu d'être dessinée au laser. Bien que plus rapide que le procédé SLA, le procédé DLP amène à faire des compromis entre résolution et qualité de la finition de surface, que ce soit pour l'impression de pièces de grande taille ou bien de plusieurs pièces plus petites mais présentant de nombreux détails.

Une autre technique de photopolymérisation en cuve a également été développée ces dernières années : la production par interface de liquide continu (CLIP). Cette technique est également basée sur l'utilisation d'une source d'irradiation pour réticuler sélectivement une composition photoréticulable. Cependant, contrairement aux deux techniques précédentes, le procédé CLIP n'est pas réalisé couche par couche mais de façon continue grâce à la présence constante d'une interface liquide. Le procédé CLIP permet donc une impression bien plus rapide qu'avec les procédés SLA ou DLP. Cette technique est par exemple décrite dans le document WO2014/126837.

Le document US 2017/0312729 décrit une méthode de photopolymérisation en cuve utilisant une composition silicone liquide photoréticulable en élastomère. Cette composition comprend un siloxane comprenant un groupe alcényl, un siloxane comprenant un hydrure et un catalyseur photoactivable. Cette composition est réticulable par réaction de polyaddition. Le problème de cette technologie basée sur la polyaddition est que la catalyse de la réaction n'est pas instantanée et que le produit nécessite souvent une étape de post-curing, c'est-à-dire une étape de post traitement thermique.

D'autres types de composition silicone sont réticulables en élastomère. Le document WO 2003/016403 décrit des compositions silicones photoréticulables comprenant des fonctionnalités acrylates. Néanmoins, ce type de composition n'est pas compatible avec toutes les méthodes de réticulation en cuve, car cette réaction est inhibée par l'oxygène présent dans l'air ambiant.

Des compositions silicones élastomères de type « dual cure » contenant des fonctions chimiques permettant à la fois une réticulation à la lumière UV et à l'humidité ont également été décrites dans la littérature, par exemple dans le document US 7105584. Cependant, les compositions dual-cure présentent des difficultés pour réticuler en profondeur et, de plus, les produits volatils issus de la réticulation à l'humidité limitent le champ des applications. Il est donc plus difficile de les mettre en œuvre dans une méthode de photopolymérisation en cuve.

Il est donc nécessaire de fournir une méthode de photopolymérisation en cuve améliorée pour produire des articles en élastomère silicone.

### Problème technique

Dans ce contexte, la présente invention vise à satisfaire au moins l'un des objectifs suivants.

L'un des objectifs essentiels de l'invention est la fourniture d'une méthode de fabrication additive par photopolymérisation en cuve pour produire un article en élastomère silicone,

L'un des objectifs essentiels de l'invention est la fourniture d'une méthode de fabrication additive pour produire un article en élastomère silicone par photopolymérisation en cuve.

L'un des objectifs essentiels de l'invention est la fourniture d'une méthode de fabrication additive pour produire un article en élastomère silicone par photopolymérisation en cuve, qui ne nécessite pas d'étape de post-curing.

L'un des objectifs essentiels de l'invention est la fourniture d'une méthode de fabrication additive par photopolymérisation en cuve pour produire un article en élastomère silicone, qui puisse être facilement mise en œuvre.

L'un des objectifs essentiels de l'invention est la fourniture d'une méthode de fabrication additive par photopolymérisation en cuve pour produire un article en élastomère silicone possédant de bonnes propriétés élastomères et de bonnes propriétés mécaniques.

L'un des objectifs essentiels de l'invention est la fourniture d'une méthode de fabrication additive par photopolymérisation en cuve pour produire un article en élastomère silicone à partir d'une composition silicone photoréticulable.

L'un des objectifs essentiels de l'invention est la fourniture d'une composition silicone photoréticulable en élastomère silicone.

### Brève description de l'invention

L'invention concerne en premier lieu une méthode de fabrication additive par photopolymérisation en cuve pour produire un article en élastomère silicone, ladite méthode comprenant les étapes suivantes :
i. Mettre en œuvre une composition silicone photoréticulable **Y** et une source d'irradiation, ladite composition silicone photoréticulable **Y** comprenant :
   a. Au moins un organopolysiloxane linéaire **A** de formule générale (I) 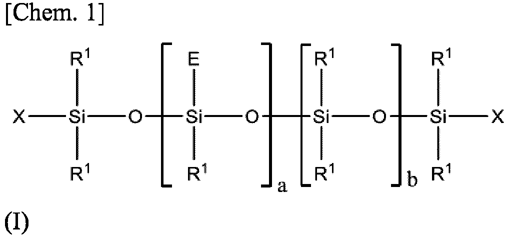
      où chaque groupe R¹ est indépendamment un radical monovalent comprenant de 1 à 30 atomes de carbone, de préférence choisi parmi les alkyles ayant de 1 à 8 atomes de carbone et les aryles ayant de 6 à 12 atomes de carbone, et plus préférentiellement parmi les groupes méthyle, éthyle, propyle, 3,3,3-trifluoropropyle, xylyle, tolyle et phényle;
      E est un groupe comprenant une fonction polymérisable et/ou réticulable par voie cationique, de préférence une fonction époxy ou vinyloxy, où la fonction polymérisable et/ou réticulable par voie cationique est liée à un atome de silicium par un radical divalent comprenant de 2 à 20 atomes de carbone et éventuellement 1 ou plusieurs hétéroatome, de préférence l'oxygène;
      chaque groupe X est indépendamment R¹ ou E ;
      a + b ≥ 150; de préférence 2 000 ≥ a + b ≥ 150 ;
      ledit organopolysiloxane **A** ayant au moins 2 groupes E comprenant une fonction polymérisable et/ou réticulable par voie cationique ; et
      ledit organopolysiloxane **A** ayant une teneur molaire en fonction polymérisable et/ou réticulable par voie cationique inférieure ou égale à 18 mmol/100g d'organopolysiloxane A, de préférence inférieure ou égale à 15 mmol/100g d'organopolysiloxane **A** ;
   b. Eventuellement au moins un organopolysiloxane linéaire **B** de formule générale (I) où
      a + b ≤100 ; de préférence 1 ≤ a + b ≤ 100 ;
      ledit organopolysiloxane **B** ayant au moins 2 groupes E comprenant une fonction polymérisable et/ou réticulable par voie cationique, de préférence une fonction époxy ou vinyloxy ; et
      ledit organopolysiloxane **B** ayant une teneur molaire en fonction polymérisable et/ou réticulable par voie cationique supérieure ou égale à 20 mmol/100g d'organopolysiloxane **B** ;
   c. Au moins un photoinitiateur cationique **C** ;
   d. Eventuellement une charge **D,**
   e. Eventuellement un photosensibilisateur **E,** et
   f. Eventuellement un photoabsorbeur **F,**
ii. Irradier sélectivement au moins une partie de la composition silicone photoréticulable **Y** au moyen de la source d'irradiation pour former une partie de l'article en élastomère silicone ; et
iii. Répéter l'étape ii) un nombre de fois suffisant pour produire l'article en élastomère silicone.

La présence d'un organopolysiloxane linéaire **A** à chaine longue, c'est-à-dire ayant au moins 150 motifs siloxyles, et à faible teneur molaire en fonction polymérisable et/ou réticulable par voie cationique permet de fabriquer un article en élastomère silicone par photopolymérisation en cuve. L'organopolysiloxane linéaire **A** permet d'obtenir de bonnes propriétés élastomères, et notamment une élongation à la rupture élevée. Par ailleurs, cette méthode de fabrication additive par photopolymérisation en cuve est facile à mettre en œuvre et ne nécessite pas d'étape de post curing, c'est-à-dire pas d'étape de post traitement thermique.

L'invention concerne également un article en élastomère silicone obtenu par la méthode décrite dans la présente demande.

L'invention concerne également une composition silicone photoréticulable **Y'** comprenant :
a. Au moins 75% en poids d'un organopolysiloxane linéaire **A'** de formule générale (I) 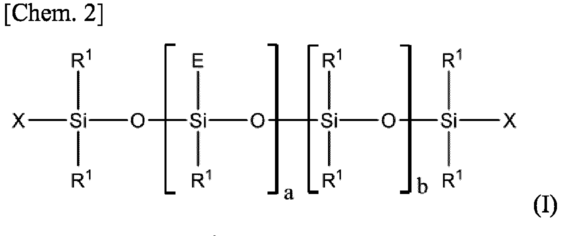
   où chaque groupe R¹ est indépendamment un radical monovalent comprenant de 1 à 30 atomes de carbone, de préférence choisi parmi les alkyles ayant de 1 à 8 atomes de carbone et les aryles ayant de 6 à 12 atomes de carbone, et plus préférentiellement parmi les groupes méthyle, éthyle, propyle, 3,3,3-trifluoropropyle, xylyle, tolyle et phényle;
   E est un groupe comprenant une fonction polymérisable et/ou réticulable par voie cationique, de préférence une fonction époxy ou vinyloxy, où la fonction polymérisable et/ou réticulable par voie cationique est liée à un atome de silicium par un radical divalent comprenant de 2 à 20 atomes de carbone et éventuellement 1 ou plusieurs hétéroatome, de préférence l'oxygène;
   chaque groupe X est indépendamment R¹ ou E ;
   a + b ≥ 200 ; de préférence 2 000 ≥ a + b ≥ 200 ;
   ledit organopolysiloxane **A'** ayant au moins 2 groupes E comprenant une fonction polymérisable et/ou réticulable par voie cationique ; et
   ledit organopolysiloxane **A'** ayant une teneur molaire en fonction polymérisable et/ou réticulable par voie cationique inférieure ou égale à 18 mmol/100g d'organopolysiloxane **A',** de préférence inférieure ou égale à 15 mmol/100g d'organopolysiloxane **A';**
b. Entre 1 et 20% en poids d'un organopolysiloxane linéaire **B'** de formule générale (I) où
   a + b ≤150 ; de préférence 1 ≤ a + b ≤ 100 ;
   ledit organopolysiloxane **B'** ayant au moins 2 groupes E comprenant une fonction polymérisable et/ou réticulable par voie cationique, de préférence une fonction époxy ou vinyloxy ; et
   ledit organopolysiloxane **B'** ayant une teneur molaire en fonction polymérisable et/ou réticulable par voie cationique supérieure ou égale à 20 mmol/100g d'organopolysiloxane **B'** ; et
c. Au moins un photoinitiateur cationique **C;**

L'invention concerne également l'utilisation d'une composition silicone photoréticulable **Y'** pour la fabrication additive d'un article en élastomère silicone.

Enfin, l'invention concerne également un élastomère silicone obtenu par réticulation de la composition silicone photoréticulable **Y'.**

### Description détaillée

### Méthode de fabrication additive pour produire un article en élastomère silicone

En premier lieu l'invention concerne une méthode de fabrication additive par photopolymérisation en cuve pour produire un article en élastomère silicone, ladite méthode comprenant les étapes suivantes :
i. Mettre en œuvre une composition silicone photoréticulable **Y** et une source d'irradiation, ladite composition silicone photoréticulable **Y** comprenant :
   a. Au moins un organopolysiloxane linéaire **A** de formule générale (I) 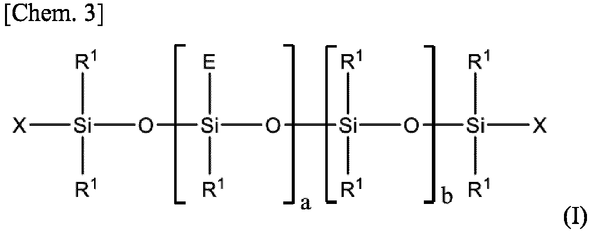
      où chaque groupe R¹ est indépendamment un radical monovalent comprenant de 1 à 30 atomes de carbone, de préférence choisi parmi les alkyles ayant de 1 à 8 atomes de carbone et les aryles ayant de 6 à 12 atomes de carbone, et plus préférentiellement parmi les groupes méthyle, éthyle, propyle, 3,3,3-trifluoropropyle, xylyle, tolyle et phényle;
      E est un groupe comprenant une fonction polymérisable et/ou réticulable par voie cationique, de préférence une fonction époxy ou vinyloxy, où la fonction polymérisable et/ou réticulable par voie cationique est liée à un atome de silicium par un radical divalent comprenant de 2 à 20 atomes de carbone et éventuellement 1 ou plusieurs hétéroatome, de préférence l'oxygène;
      chaque groupe X est indépendamment R¹ ou E ;
      a + b ≥ 150; de préférence 2 000 ≥ a + b ≥ 150 ;
      ledit organopolysiloxane A ayant au moins 2 groupes E comprenant une fonction polymérisable et/ou réticulable par voie cationique; et
      ledit organopolysiloxane **A** ayant une teneur molaire en fonction polymérisable et/ou réticulable par voie cationique inférieure ou égal à 18 mmol/100g d'organopolysiloxane **A,** de préférence inférieure ou égal à 15 mmol/100g d'organopolysiloxane **A ;**
   b. Eventuellement au moins un organopolysiloxane linéaire **B** de formule générale (I) où
      a + b ≤100 ; de préférence 1 ≤ a + b ≤ 100 ;
      ledit organopolysiloxane **B** ayant au moins 2 groupes E comprenant une fonction polymérisable et/ou réticulable par voie cationique, de préférence une fonction époxy ou vinyloxy ; et
      ledit organopolysiloxane **B** ayant une teneur molaire en fonction polymérisable et/ou réticulable par voie cationique supérieure ou égale à 20 mmol/100g d'organopolysiloxane **B** ;
   c. Au moins un photoinitiateur cationique **C** ;
   d. Eventuellement une charge **D,**
   e. Eventuellement un photosensibilisateur **E,** et
   f. Eventuellement un photoabsorbeur **F,**
ii. Irradier sélectivement au moins une partie de la composition silicone photoréticulable **Y** au moyen de la source d'irradiation pour former une partie de l'article en élastomère silicone ; et
iii. Répéter l'étape ii) un nombre de fois suffisant pour produire l'article en élastomère silicone.

En général, tous les procédés de fabrication additive ont un point de départ commun qui est une source de données informatiques ou un programme informatique qui peut décrire un objet. Cette source de données informatiques ou ce programme informatique peut être basé sur un objet réel ou virtuel. Par exemple, un objet réel peut être scanné en utilisant un scanner 3D et les données obtenues peuvent être utilisées pour générer la source de données informatiques ou le programme informatique. Alternativement, la source de données informatiques ou le programme informatique peut être conçu de zéro.

La source de données informatiques ou le programme informatique est en général converti en un fichier au format stéréolithographie (STL), cependant, d'autres formats de fichier peuvent être utilisés. Le fichier est généralement lu par un logiciel d'impression 3D qui utilise le fichier et, éventuellement la contribution de l'utilisateur, pour séparer l'objet en centaines, milliers ou encore millions de « couches ». Habituellement, le logiciel d'impression 3D transfère les instructions à la machine, par exemple sous forme de G-code, qui sont lues par l'imprimante 3D qui fabrique alors les objets, en général couche par couche.

La méthode de fabrication additive est une méthode de fabrication additive par photopolymérisation en cuve, en particulier, par impression par stéréolithographie laser (SLA), par traitement numérique de la lumière (DLP), ou par production par interface de liquide continu (CLIP). Ces technologies et les équipements qui y sont associés sont bien connus de l'homme du métier, qui saura choisir la technique appropriée et l'imprimante 3D correspondante. Ces technologies et équipements sont par exemple décrits dans les documents suivants : WO2015/197495, US5236637, WO2016/181149 et WO2014/126837.

La source d'irradiation peut être n'importe quelle source d'irradiation qui permet de photoréticuler la composition silicone photoréticulable **Y.** Avantageusement, la source d'irradiation est une source de lumière, de préférence une source de lumière ultraviolette (UV), visible, ou infrarouge (IR). En général, les sources de lumière UV ont une longueur d'onde comprise entre 200 et 400 nm, les sources de lumière visible entre 400 et 700 nm, et les sources de lumière IR ont une longueur d'onde supérieure à 700 nm, par exemple comprise entre 700 nm et 1 mm, ou entre 700 et 10 000 nm. La source de lumière peut être une lampe ou un laser. De préférence, la source d'irradiation est choisie parmi les lampes UV, les lasers UV, les lampes visible, les lasers visible, les lampes IR et les lasers IR. Parmi les sources d'irradiation utilisables, on peut citer les lampes au mercure qui sont couramment utilisées dans les réactions de photopolymérisation des compositions silicones. Dans un mode de réalisation particulier du procédé, la source d'irradiation est une lampe LED, de préférence une lampe LED ayant une longueur d'onde de 355, 365, 385 ou 405 nm.

La puissance de la source d'irradiation peut être d'au moins, 1, 10 ou 50 mW/cm². Elle peut être comprise entre 1 et 1 000 mW/cm², de préférence entre 10 et 500 mW/cm², et plus préférentiellement entre 50 et 200 mW/cm².

Dans un mode de réalisation particulier, la profondeur de pénétration de l'irradiation (Dp) est inférieure à 500 µm, de préférence la profondeur de pénétration est comprise entre 50 et 500 µm, et plus préférentiellement entre 100 et 400 µm.

Dans un mode de réalisation spécifique, la méthode ne met pas en œuvre de composition de type dual cure. En particulier, la méthode ne met pas en œuvre une composition réticulable par polyaddition.

Dans un mode de réalisation particulier, la méthode ne met pas en œuvre d'étape de post curing.

La composition silicone photoréticulable **Y** est mise en œuvre dans une cuve et l'article en élastomère silicone est produit sur un support, de préférence un support mobile. Le support peut être n'importe quel type de support. Avantageusement, le support est une plateforme d'une imprimante 3D, telle qu'une plateforme mobile, ou une ou plusieurs couches de la composition silicone photoréticulable **Y** déjà réticulée(s).

Selon un premier mode de réalisation de la méthode, la méthode de fabrication additive est effectuée couche par couche, chaque couche représentant une section transversale de l'objet à imprimer. Ce premier mode de réalisation est particulièrement adapté à l'impression par stéréolithographie laser (SLA), et au traitement numérique de la lumière (DLP). Dans ce premier mode de réalisation, l'étape ii) d'irradiation peut comprendre les sous étapes suivantes :
a. Déposer une couche de la composition silicone photoréticulable **Y** sur un support;
b. Irradier sélectivement la couche avec une source d'irradiation pour former une première section transversale de l'article en élastomère silicone à produire ;
c. Déposer une couche supplémentaire de composition silicone photoréticulable **Y** sur la première section transversale produite à l'étape b) ; et
d. Irradier sélectivement la couche supplémentaire pour former une section transversale supplémentaire de l'article en élastomère silicone à produire.

Le support sur lequel la couche de la composition silicone photoréticulable **Y** est déposée lors de l'étape a) peut être n'importe quel type de support. De préférence, il s'agit d'un support mobile. Avantageusement, le support est une plateforme d'une imprimante 3D, telle qu'une plateforme mobile. Le support peut également comprendre une ou plusieurs couches de la composition silicone photoréticulable **Y** déjà réticulée(s).

De préférence, lors de l'étape d), la section transversale supplémentaire qui est formée adhère à la première section transversale de l'article en élastomère silicone formée à l'étape b).

Avantageusement, l'épaisseur d'une couche de composition silicone photoréticulable **Y** est comprise entre 0,1 et 500 µm, de préférence entre 5 et 400 µm, préférentiellement entre 10 et 300 µm, et plus préférentiellement entre 10 et 100 µm.

Dans un mode de réalisation particulier, la durée d'irradiation de la couche de la composition silicone photoréticulable **Y** est d'au moins 0,001 secondes. De préférence, la durée d'irradiation est comprise entre 0,001 secondes et 1 heure, et plus préférentiellement entre 0,01 secondes et 5 minutes.

Ces différents paramètres peuvent être ajustés en fonction du résultat recherché.

Le dépôt d'une couche de composition silicone photoréticulable **Y** peut être effectué en bougeant le support, ou à l'aide d'une lame, ou racle, qui vient déposer une nouvelle couche de composition silicone photoréticulable **Y.**

De préférence, dans le cas où la source d'irradiation est un laser (procédé SLA par exemple) le laser trace la section transversale de l'article en élastomère silicone à produire, afin d'avoir une irradiation sélective, et dans le cas où la source d'irradiation est une lampe (procédé DLP par exemple) c'est une seule image de la section transversale qui est projetée sur l'ensemble de la surface de la composition photoréticulable **Y.**

Deux variantes sont possibles dans ce premier mode de réalisation : la fabrication additive peut être réalisée à l'endroit, ou être inversée. Ces deux variantes sont décrites dans le document US5236637.

Dans une première variante de ce premier mode de réalisation, la fabrication additive est réalisée à l'endroit : la composition silicone photoréticulable **Y** est contenue dans une cuve et la source d'irradiation est focalisée sur la surface de la composition silicone photoréticulable **Y.** La couche qui est irradiée est celle comprise entre le support et la surface de la composition silicone photoréticulable **Y.** Dans cette première variante, le dépôt d'une couche de composition silicone photoréticulable **Y** est effectué en descendant le support dans la cuve d'une distance égale à l'épaisseur d'une couche. Une lame, ou racle, peut alors balayer la surface de la composition silicone photoréticulable **Y,** ce qui permet de l'aplanir.

Dans une deuxième variante de ce premier mode de réalisation, la fabrication additive est inversée : la cuve comprend un fond transparent et une surface non adhésive, et la source d'irradiation est focalisée sur le fond transparent de la cuve. La couche qui est irradiée est donc celle comprise entre le fond de la cuve et le support. Dans ce cas, le dépôt d'une couche de composition silicone photoréticulable **Y** est effectué en élevant le support pour laisser la composition silicone photoréticulable **Y** s'insérée entre le fond de la cuve et le support. La distance entre le fond de la cuve et le support correspond à l'épaisseur d'une couche.

Avantageusement, la méthode de fabrication additive est une méthode de fabrication additive par photopolymérisation en cuve par traitement numérique de la lumière (DLP), où la fabrication additive est réalisée à l'endroit : le dépôt d'une couche de composition silicone photoréticulable **Y** est effectué en descendant le support dans la cuve d'une distance égale à l'épaisseur d'une couche, et une lame, ou racle, balaye la surface de la composition silicone photoréticulable **Y.**

Selon un deuxième mode de réalisation la méthode, la méthode de fabrication additive est effectuée en continu. Ce deuxième mode de réalisation est particulièrement adapté à la production par interface de liquide continu (CLIP) décrit dans le document WO2014/126837. Dans ce deuxième mode de réalisation, l'étape ii) d'irradiation peut comprendre les sous étapes suivantes, qui ont lieu simultanément :
a. Irradier sélectivement au moins une partie de la composition silicone photoréticulable **Y** avec une source d'irradiation pour former une partie de l'article en élastomère silicone ; et
b. Déplacer la partie de l'article en élastomère silicone formée à l'étape a) en l'éloignant de la source d'irradiation, selon l'axe d'irradiation.

Avantageusement, dans l'étape a), la partie de l'article en élastomère silicone est formée sur un support et lors de l'étape b), c'est le support qui est déplacé simultanément.

De préférence, dans ce deuxième mode de réalisation, la fabrication additive est inversée : la cuve comprend un fond transparent et la source d'irradiation est focalisée sur le fond transparent de la cuve. Grâce à une membrane perméable à l'oxygène, la photopolymérisation n'a lieu qu'à l'interface entre la composition silicone photoréticulable **Y** et le support, la composition photoréticulable **Y** entre le fond de la cuve et l'interface ne photopolymérise pas. Ainsi, il est possible de maintenir une interface liquide continue où l'article en élastomère silicone est formé en irradiant la composition photoréticulable **Y** et en déplaçant simultanément la partie de l'article en élastomère silicone formée en dehors de la cuve.

Une fois l'article en élastomère silicone obtenu, il est possible de le rincer afin d'éliminer la composition silicone photoréticulable **Y** non réticulée.

Une fois l'article en élastomère silicone obtenu, il est également possible de procéder à des étapes supplémentaires pour améliorer la qualité de la surface de l'article. Le sablage est, par exemple, une méthode connue pour réduire ou supprimer les couches distinctes visibles. La pulvérisation ou le revêtement de l'article en élastomère silicone par une composition silicone LSR ou RTV réticulable par chauffage ou rayonnement UV peut aussi être utilisé pour avoir un aspect lisse. Il est également possible d'effectuer un traitement de surface de l'article obtenu avec un laser.

Pour des applications médicales, il est possible de stériliser l'article en élastomère silicone obtenu. La stérilisation de l'article peut être effectuée en chauffant, par exemple à une température supérieure à 100°C, soit sous atmosphère sèche, soit en autoclave avec de la vapeur. La stérilisation peut également être effectuée par rayons gamma, avec de l'oxyde d'éthylène, ou par faisceau d'électron.

L'invention concerne également un article en élastomère silicone obtenu par la méthode décrite dans la présente demande.

L'article en élastomère silicone obtenu peur être n'importe quel article avec une géométrie simple ou complexe. Il peut par exemple s'agir de moules en silicones, de masques, de tuyaux, de modèles anatomiques (fonctionnels ou non fonctionnels) comme un cœur, un rein, une prostate..., de modèles pour chirurgien ou pour l'enseignement, d'orthèses, de prothèses, tels que des prothèses dentaires, d'aligneurs, de protège-dents, ou d'implants de classes différentes, tels que des implants à long terme, des appareils auditif, des stents, des implants du larynx, etc.

L'article en élastomère silicone obtenu peut également être un vérin pour la robotique, un joint, une pièce mécanique pour l'automobile ou l'aéronautique, une pièce pour des appareils électroniques, une pièce pour l'encapsulation de composants, un isolant vibrationnel, un isolant d'impact ou un isolant sonore.

### Composition silicone photoréticulable Y

La composition silicone photoréticulable **Y** mise en œuvre dans la méthode comprend :
a. Au moins un organopolysiloxane linéaire A de formule générale (I) 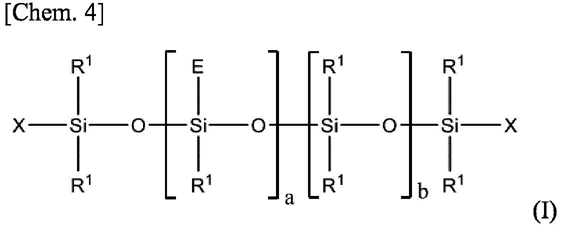
   où chaque groupe R¹ est indépendamment un radical monovalent comprenant de 1 à 30 atomes de carbone, de préférence choisi parmi les alkyles ayant de 1 à 8 atomes de carbone et les aryles ayant de 6 à 12 atomes de carbone, et plus préférentiellement parmi les groupes méthyle, éthyle, propyle, 3,3,3-trifluoropropyle, xylyle, tolyle et phényle;
   E est un groupe comprenant une fonction polymérisable et/ou réticulable par voie cationique, de préférence une fonction époxy ou vinyloxy, où la fonction polymérisable et/ou réticulable par voie cationique est liée à un atome de silicium par un radical divalent comprenant de 2 à 20 atomes de carbone et éventuellement 1 ou plusieurs hétéroatome, de préférence l'oxygène ;
   chaque groupe X est indépendamment R¹ ou E
   a + b ≥ 150; de préférence 2 000 ≥ a + b ≥ 150 ;
   ledit organopolysiloxane **A** ayant au moins 2 groupes E comprenant une fonction polymérisable et/ou réticulable par voie cationique, et
   ledit organopolysiloxane **A** ayant une teneur molaire en fonction polymérisable et/ou réticulable par voie cationique inférieure ou égale à 18 mmol/100g d'organopolysiloxane **A,** de préférence inférieure ou égale à 15 mmol/100g d'organopolysiloxane **A;**
b. Eventuellement au moins un organopolysiloxane linéaire **B** de formule générale (I) où
   a + b ≤100 ; de préférence 1 ≤ a + b ≤ 100 ;
   ledit organopolysiloxane **B** ayant au moins 2 groupes E comprenant une fonction polymérisable et/ou réticulable par voie cationique, de préférence une fonction époxy ou vinyloxy ,et
   ledit organopolysiloxane **B** ayant une teneur molaire en fonction polymérisable et/ou réticulable par voie cationique supérieure ou égale à 20 mmol/100g d'organopolysiloxane **B** ;
c. Au moins un photoinitiateur cationique **C** ;
d. Eventuellement une charge **D,**
e. Eventuellement un photosensibilisateur **E,** et
f. Eventuellement un photoabsorbeur **F.**

Par « mettre en œuvre une composition silicone photoréticulable **Y** », on entend employer une composition silicone photoréticulable **Y.** Cette composition silicone photoréticulable **Y** peut être préparée selon les méthodes connues de l'homme du métier. Avantageusement, la composition silicone photoréticulable **Y** est préparée en mélangeant tous les composants, par exemple manuellement ou au speed mixer. Une fois les composants mélangés, il est possible de dégazer la composition silicone photoréticulable **Y.**

La teneur molaire en fonction polymérisable et/ou réticulable par voie cationique de l'organopolysiloxane **A** est inférieure ou égale à 18 mmol/100g d'organopolysiloxane **A,** de préférence inférieure ou égale à 15 mmol/100g d'organopolysiloxane **A.** La teneur molaire en fonction polymérisable et/ou réticulable par voie cationique peut par exemple être comprise entre 0,5 et 18 mmol/100g d'organopolysiloxane **A,** ou entre 1 et 15 mmol/100g d'organopolysiloxane **A.**

Dans un mode de réalisation particulier, l'organopolysiloxane de formule **A** est un organopolysiloxane de formule (I) où a + b ≥ 200; de préférence 1 000 ≥ a + b ≥ 200.

L'organopolysiloxane A est constitué de motifs siloxyles « D » choisis parmi le groupe constitué par les motifs siloxyles D : R¹₂SiO_{2/2} et D^{E}: ER¹SiO_{2/2}, et de motifs siloxyles « M » choisis parmi le groupe constitué par les motifs siloxyles M^{E} :ER¹₂SiO_{1/2}. Les symboles R¹ et E sont tels que décrits ci-dessus.

L'organopolysiloxane linéaire **A** comprend de préférence 2 groupes E comprenant une fonction polymérisable et/ou réticulable par voie cationique.

Avantageusement, l'organopolysiloxane **A** est un organopolysiloxane de formule (I) où a=0. Les groupes E comprenant une fonction polymérisable et/ou réticulable par voie cationique sont alors en bout de chaine et l'organopolysiloxane **A** peut avoir une formule générale M^{E}DₓM^{E} avec x ≥ 150, de préférence x ≥ 200.

L'organopolysiloxane **A** peut être une huile de viscosité dynamique de l'ordre de 1 à 100 000 mPa.s à 25°C, généralement de l'ordre de 10 à 70 000 mPa.s à 25°C, de préférence de l'ordre de 10 à 30 000 mPa.s à 25°C, et encore plus préférentiellement de l'ordre de 500 à 20 000 mPa.s à 25°C.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

La composition silicone photoréticulable **Y** peut comprendre au moins 70% en poids d'organopolysiloxane **A** par rapport au poids total de la composition silicone photoréticulable **Y,** de préférence entre 70 et 99% en poids, et plus préférentiellement entre 75 et 90% en poids. La composition silicone photoréticulable **Y** peut comprendre au moins 75% en poids d'organopolysiloxane **A.**

La composition silicone photoréticulable **Y** peut comprendre un organopolysiloxane linéaire **B** de formule générale (I) où
a + b ≤100 ; de préférence 1 ≤ a + b ≤ 100 ; et
ledit organopolysiloxane **B** ayant une teneur molaire en fonction polymérisable et/ou réticulable par voie cationique supérieure ou égale à 20 mmol/100g d'organopolysiloxane **B.**

L'organopolysiloxane linéaire **B** possède une chaine plus courte que l'organopolysiloxane **A** et une teneur molaire en fonction polymérisable et/ou réticulable par voie cationique plus élevée. Cela permet d'améliorer les propriétés mécaniques de l'article en élastomère silicone obtenu à l'issue du procédé, tout en conservant de bonnes propriétés élastomères. En effet, le module à la rupture et la dureté de l'article en élastomère silicone obtenu sont augmentés, tout en conservant une élongation à la rupture élevée.

La teneur molaire en fonction polymérisable et/ou réticulable par voie cationique de l'organopolysiloxane **B** est supérieure ou égale à 20 mmol/100g d'organopolysiloxane **B,** de préférence supérieure ou égale à 50 mmol/100g d'organopolysiloxane **B,** et plus préférentiellement supérieure ou égale à 80 mmol/100g d'organopolysiloxane **B.** La teneur molaire en fonction polymérisable et/ou réticulable par voie cationique de l'organopolysiloxane **B** peut par exemple être comprise entre 20 et 500 mmol/100g, ou entre 50 et 250 mmol/100g d'organopolysiloxane **B.**

L'organopolysiloxane **B** est constitué de motifs siloxyles « D » choisis parmi le groupe constitué par les motifs siloxyles D : R¹₂SiO_{2/2} et D^{E}: ER¹SiO_{2/2}, et de motifs siloxyles « M » choisis parmi le groupe constitué par les motifs siloxyles M^{E}: ER¹₂SiO_{1/2}. Les symboles R¹ et E sont tels que décrits ci-dessus.

L'organopolysiloxane linéaire **B** comprend de préférence 2 groupes E comprenant une fonction polymérisable et/ou réticulable par voie cationique.

Dans un mode de réalisation particulier, l'organopolysiloxane **B** un organopolysiloxane de formule (I) où a + b ≤75 ; de préférence 1 ≤ a + b ≤ 75.

Avantageusement, l'organopolysiloxane **B** est un organopolysiloxane de formule (I) où a=0. Les groupes E comprenant une fonction polymérisable et/ou réticulable par voie cationique sont alors en bout de chaine et l'organopolysiloxane **B** peut avoir une formule générale M^{E}DₓM^{E} avec x ≤ 100, de préférence x ≤ 75.

L'organopolysiloxane **B** peut être une huile de viscosité dynamique de l'ordre de 1 à 100 000 mPa.s à 25°C, généralement de l'ordre de 5 à 70 000 mPa.s à 25°C, et de préférence l'ordre de 10 à 1 000 mPa.s à 25°C

La composition silicone photoréticulable **Y** peut comprendre entre 1 et 20% en poids de l'organopolysiloxane **B** par rapport au poids total de la composition silicone photoréticulable **Y,** de préférence entre 5 et 15% en poids.

La fonction polymérisable et/ou réticulable par voie cationique du groupe E est de préférence choisie parmi les fonctions époxy, vinyloxy, oxétane, et dioxolane. Avantageusement, la fonction polymérisable et/ou réticulable par voie cationique du groupe E est une fonction époxy ou vinyloxy, de préférence une fonction époxy.

Lorsque la fonction polymérisable et/ou réticulable par voie cationique du groupe E est une fonction époxy, les groupes E de l'organopolysiloxane **A** et/ou de l'organopolysiloxane **B** sont de préférence choisis parmi les groupes suivants : 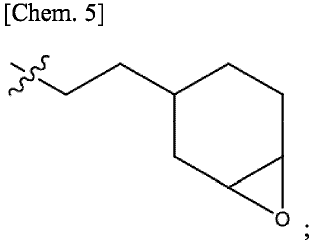 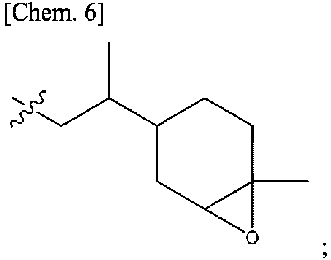 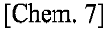 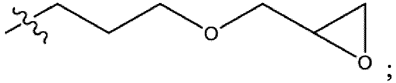 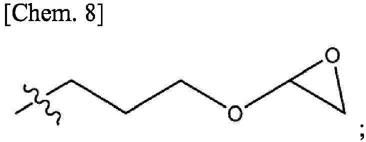 et 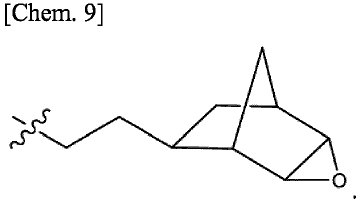 La ligne ondulée représente l'endroit où le groupe E est lié à un atome de silicium de l'organopolysiloxane.

Lorsque la fonction polymérisable et/ou réticulable par voie cationique du groupe E est une fonction vinyloxy, les groupes E de l'organopolysiloxane **A** et/ou de l'organopolysiloxane **B** sont de formule (II):

-G-O-CH=CH₂ (II)

dans laquelle G représente un radical divalent comprenant de 2 à 20 atomes de carbone et éventuellement 1 ou plusieurs hétéroatomes, de préférence l'oxygène.

De préférence, le groupe vinyloxy est choisi parmi les groupes suivants :
-(CH₃)₂-O-CH=CH₂ ;
-O-(CH₂)₄-O-CH=CH₂ ; et
-(CH₂)₃-O-R¹¹-O-CH=CH₂, où R¹¹ est un radical divalent choisi parmi les alkylènes linéaires ou ramifiés en C₁-C₁₂, et les arylènes en C₆-C₁₂, de préférence phénylène, les arylènes étant éventuellement substitué par un, deux ou trois groupes alkyle en C₁-C₆.

De préférence, l'organopolysiloxane **A** et/ou l'organopolysiloxane **B** est de formule (III) : 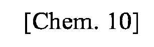 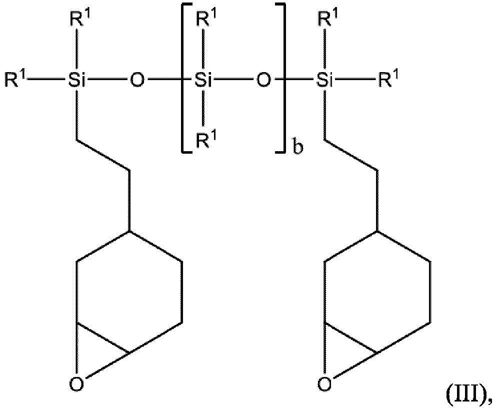 où R¹ est tel que décrit ci-dessus, de préférence R¹ est un groupe méthyle.
Dans le cas de l'organopolysiloxane **A,** b est ≥ 150, de préférence b ≥ 200, et dans le cas de l'organopolysiloxane **B,** b est ≤ 100, de préférence b ≤ 75.

Avantageusement, le photoinitiateur cationique **C** est choisi parmi les sels d'onium, de préférence dans le groupe constitué par les sels de diaryliodonium, les sels d'aryldiazonium, les sels d'alcoxypyridinium, les sels de triarylesulfonium, les sels de sulfonium, et leurs mélanges, De préférence, le photoinitiateur cationique **C** est un sel de diaryliodonium.

Pour les sels d'onium c'est la partie cationique qui est responsable de l'absorption du rayonnement UV, quant à la partie anionique elle détermine la force de l'acide formé et par conséquent la vitesse d'amorçage de la polymérisation. Plus son caractère nucléophile est faible et plus la réaction de photolyse est rapide. Les différents contre-ions utilisés dans les photoamorceurs cationiques peuvent donc être classés selon leur réactivité (décroissante): (C₆F₅)₄B > SbF₆⁻>> AsF₆⁻ > PF₆⁻ > BF₄⁻. Le sel d'onium peut être un borate d'onium. Le borate d'onium pourra être choisi parmi ceux décrits dans le document US7041710 B2.

Le sel d'onium est de préférence un borate d'iodonium. Avantageusement le borate d'iodonium et choisi parmi ceux:
A) dont l'entité cationique du borate est sélectionnée parmi :
   les sels d'onium de formule (IV) :

      [(R²)ₙ - I - (R³)ₘ]⁺ (IV)
   formule dans laquelle :
      - les radicaux R², identiques ou différents, représentent un radical aryle en C₆-C₂₀, ou un radical hétéroaryle ayant de 5 à 15 atomes de cycle,
      - les radicaux R³, identiques ou différents, répondent à la même définition que R² ou représentent un radical alkyle linéaire ou ramifié en C₁-C₃₀, ou un radical alkényle linéaire ou ramifié en C₂-C₃₀ ;
   lesdits radicaux R² et R³ étant éventuellement substitués par un ou plusieurs :
      i) groupement alkyle linéaire ou ramifié en C₁-C₃₀,
      ii) groupement OR¹²,
      iii) groupement cétonique -(C=O)- R¹²
      iv) groupement ester ou acide carboxylique -(C=O)-O- R¹²,
      v) groupement mercapto SR¹²,
      vi) groupement mercapto SOR¹²,
      vii) groupement alkényle linéaire ou ramifié en C₂-C₃₀, éventuellement substitué par un ou plusieurs groupements alkyle linéaire ou ramifié en C₁-C₃₀, groupement OR¹², groupement -CN, et/ou groupement-(C=O)-O- R¹² ;
         R¹² étant un radical choisi parmi le groupe constitué d'un atome d'hydrogène, un radical alkyle linéaire ou ramifié en C₁-C₂₅, un radical aryle en C₆-C₃₀, ou un radical alkylaryle dont la partie alkyle est linéaire ou ramifiée en C₁-C₂₅ et la partie aryle est en C₆-C₃₀,
      viii) groupement nitro,
      ix) atome de chlore,
      x) atome de brome, et/ou
      xi) groupement cyano,

      - n est un nombre entier allant de 1 à v+1, v étant la valence de l'iode,
      - m est un nombre entier allant de 0 à v-1, avec n + m = v+1 ; et
B) dont l'entité anionique du borate a pour formule (V) :

   [B Zₐ R⁴_{b}]⁻ (V)

   dans laquelle :
   - a et b sont des nombres entiers tels que 0 ≤ a ≤3, 1 ≤ b ≤4, et a + b = 4,
   - les symboles Z, identiques ou différents, représentent :
      i) un atome d'halogène choisi parmi le chlore et/ou le fluor avec 0 ≤ a ≤ 3, ou
      ii) une fonction OH avec 0 ≤ a ≤ 2, et
   - les radicaux R⁴, identiques ou différents, représentent :
      i) un radical phényle substitué par au moins un groupement électroattracteur tel que -CF₃, - OCF₃, -NO₂, CN, -SO₂R¹⁴, -O(C=O)- R¹⁴, -O-CₙF₂ₙ₊₁, et -CₙF₂ₙ₊₁ , n étant un nombre entier compris entre 1 et 20 ou substitué par au moins 2 atomes d'halogène, en particulier le fluor, ou
      ii) un radical aryle contenant au moins deux noyaux aromatiques tel que biphényle, naphtyle, éventuellement substitué par au moins un atome d'halogène, notamment un atome de fluor ou un groupement électroattracteur tel que -CF₃, -OCF₃, -NO₂, -CN, -SO₂R¹⁴,-O(C=O)-R¹⁴, -O-CₙF₂ₙ₊₁, et -CₙF₂ₙ₊₁
   R¹⁴ étant -O-CₙF₂ₙ₊₁, ou -CₙF₂ₙ₊₁ , n étant un nombre entier compris entre 1 et 20.

L'anion borate est de préférence choisi dans le groupe constitué par [B(C₆F₅)₄]⁻, [(C₆F₅)₂BF₂]⁻, [B(C₆H₄CF₃)₄]⁻, [B(C₆F₄OCF₃)₄]⁻, [B(C₆H₃(CF₃)₂)₄]⁻, [B(C₆H₃F₂)₄]⁻, [C₆F₅BF₃]⁻, et leurs mélanges.

Selon un mode de réalisation particulier, le borate d'iodonium est choisi parmi les composés de formule (VI) : 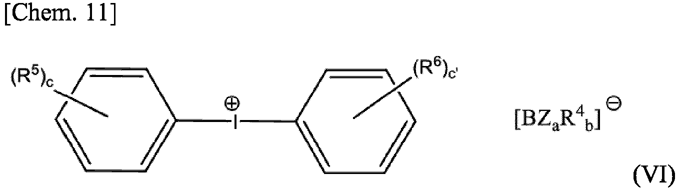 dans laquelle :
- les symboles R⁵ et R⁶ sont identiques ou différents, et représentent chacun un radical alkyle linéaire ou ramifié ayant de 10 à 30 atomes de carbone et de préférence de 10 à 20 atomes de carbone, encore plus préférentiellement de 10 à 15 atomes de carbone, encore plus préférentiellement de 10 à 13 atomes de carbone et encore plus préférentiellement 12 atomes de carbone,
- c et c' sont des nombres entiers, identiques ou différents, allant de 1 à 5 et de préférence c et c' sont égal à 1,
- Z, a, R⁴ et b sont tels que décrits ci-dessus à la formule (V).

Selon un mode de réalisation spécifique, le borate d'iodonium est choisi parmi les composés de formule (VII) : 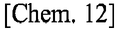 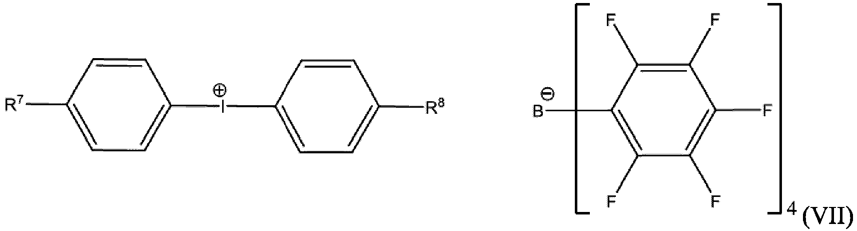 où
les symboles R⁷ et R⁸ sont identiques ou différents, et représentent chacun un radical alkyle linéaire ou branché ayant de 10 à 30 atomes de carbone, de préférence ayant de 10 à 20 atomes de carbone, et encore plus préférentiellement de 10 à 15 atomes de carbone.

Selon un mode de réalisation préféré, le borate d'iodonium est choisi parmi les composés de formule (VIII)

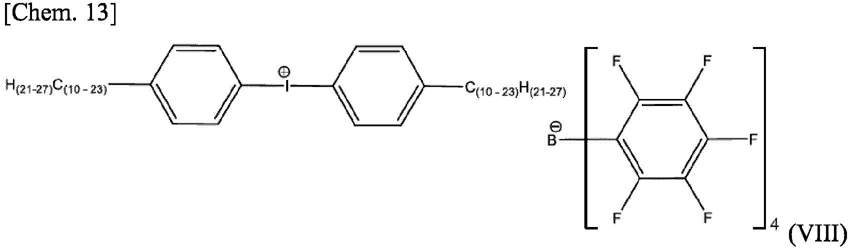

Le sel d'onium peut être utilisé en combinaison avec un alcool de Guerbet, afin d'éviter les nuisances olfactives. L'alcool de Guerbet peut avoir la formule (IX) :

R⁹-CH(CH₂OH)-R¹⁰ (IX)

où
les symboles R⁹ et R¹⁰ sont identiques ou différents, et représentent chacun un radical alkyle ayant de 4 à 12 atomes de carbone, et l'alcool de Guerbet ayant un nombre total d'atomes de carbone compris entre 10 et 20.

Selon un mode de réalisation particulier, le photoinitiateur cationique C est choisi parmi les sels d'onium :
A) dont l'entité cationique est sélectionnée parmi :
   les sels d'onium de formule (X)

      [(R¹⁹) - I - (R²⁰)]⁺ (X)
   formule dans laquelle :
      le radical R¹⁹ représente un radical de formule (XI) 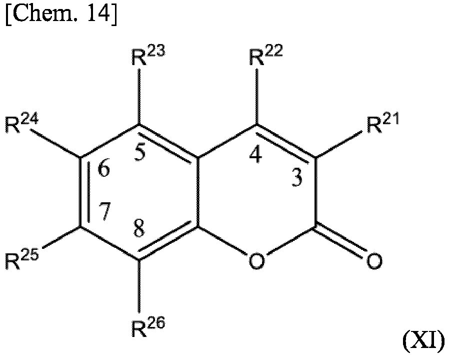
      où
         - le radical R¹⁹ est lié à l'atome d'iode par une liaison à l'une des positions 3-8, le substituant R²¹-R²⁶ présent à cette position étant alors absent,
         - les substituants R²¹-R²⁶ qui sont présents, identiques ou différents, représentent un atome d'hydrogène, ou un radical alkyle linéaire ou ramifié en C₁-C₁₂, ou un radical cétonique - (C=O)- R¹⁵, ou un radical -OR¹⁵,
         - R¹⁵ étant un radical choisi parmi le groupe constitué d'un atome d'hydrogène, un radical alkyle linéaire ou ramifié en C₁-C₂₅, un radical haloalkyle linéaire ou ramifié en C₁-C₂₅, un radical aryle en C₆-C₃₀, ou un radical alkylaryle dont la partie alkyle est linéaire ou ramifiée en C₁-C₂₅ et la partie aryle est en C₆-C₃₀, ledit radical aryle et ledit radical alkylaryle étant éventuellement substitué par un ou plusieurs atomes d'halogène,
         - le radical R²⁰ représente un radical aryle en C₆-C₂₀, ou un radical alkylaryle dont la partie alkyle est linéaire ou ramifiée en C₁-C₂₅ et la partie aryle est en C₆-C₃₀,
      le radical R²⁰ étant éventuellement substitué par un ou plusieurs :
         i) groupement alkyle linéaire ou ramifié en C₁-C₃₀,
         ii) groupement haloalkyle linéaire ou ramifié en C₁-C₃₀
         iii) groupement OR¹⁶,
         iv) groupement cétonique -(C=O)-R¹⁶
         v) groupement ester ou acide carboxylique -(C=O)-O-R¹⁶,
            R¹⁶ étant un radical choisi parmi le groupe constitué d'un atome d'hydrogène, un radical alkyle linéaire ou ramifié en C₁-C₂₅, un radical haloalkyle linéaire ou ramifié en C₁-C₂₅, un radical aryle en C₆-C₃₀, ou un radical alkylaryle dont la partie alkyle est linéaire ou ramifiée en C₁-C₂₅ et la partie aryle est en C₆-C₃₀,
         vi) groupement nitro,
         vii) atome d'halogène, et
B) dont l'entité anionique est sélectionné parmi SbF₆⁻, AsF₆⁻, PF₆⁻, ClO₄ ou un borate de formule (V) :

   [B Zₐ R⁴_{b}]⁻ (V)

   où Z, a, R⁴ et b sont tels que décrits ci-dessus à la formule (V).

De préférence,
le radical R¹⁹ est lié à l'atome d'iode par une liaison à la position 3, le radical R²¹ n'est donc pas présent,
   - R²² correspond à un groupe méthyl,
   - R²³ correspond à un atome d'hydrogène, un groupe méthoxy, un groupe butoxy, ou un groupe benzyloxy,
   - R²⁴ correspond à un atome d'hydrogène,
   - R²⁵ correspond à un atome d'hydrogène, un groupe benzyloxy, un groupe méthoxy, un groupe butoxy, ou un groupe éthoxy,
   - R²⁶ correspond à H, un groupe benzyloxy, ou un groupe méthoxy, et
le radical R²⁰ représente un groupe phényle, un groupe p-méthylphényle, ou un groupe naphtyle.

L'anion borate est de préférence choisi dans le groupe constitué par [B(C₆F₅)₄]⁻, [(C₆F₅)₂BF₂]⁻, [B(C₆H₄CF₃)₄]⁻, [B(C₆F₄OCF₃)₄]⁻, [B(C₆H₃(CF₃)₂)₄]⁻, [B(C₆H₃F₂)₄]⁻, [C₆F₅BF₃]⁻, et leurs mélanges.

Avantageusement, le sel d'onium de formule (IX) est un composé de formule (XII) 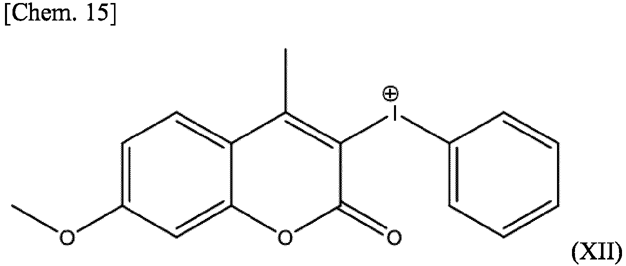 et l'entité anionique est choisie parmi SbF₆⁻, PF₆⁻,et [B(C₆F₅)₄]⁻.

Selon un mode de réalisation particulier, le photoinitiateur cationique C est choisi parmi les sels d'onium :
A) dont l'entité cationique est sélectionnée parmi :
   les sels d'onium de formule (XIII) : 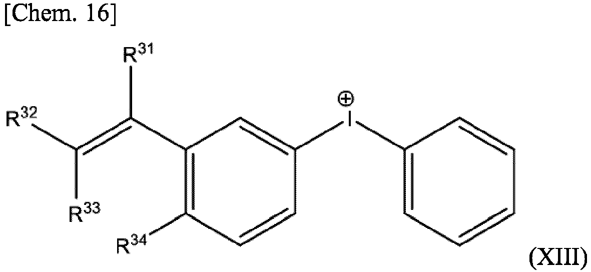
   où
      - les substituants R³¹, R³² et R³³ sont identiques ou différents et représentent chacun H, un radical alkyle linéaire ou ramifié en C₁-C₁₂, -O-R³⁵, -CN, ou -(C=O)-O-R³⁵;
      - R³⁴ représente -O-R³⁵;
   R³⁵ étant un radical choisi parmi H et les alkyles linéaires ou ramifiés en C₁-C₁₂ ; et
B) dont l'entité anionique est sélectionné parmi SbF₆⁻, AsF₆⁻, PF₆⁻, ClO₄ ou un borate de formule (V)

   [B Zₐ R⁴_{b}]⁻ (V)

   où Z, a, R⁴ et b sont tels que décrits ci-dessus à la formule (V).

Par « hétéroaryle ayant de 5 à 15 atomes de cycle », on entend un système cyclique polyinsaturé aromatique ayant de 5 à 15 atomes de cycle, comprenant un ou plusieurs cycles condensés, où au moins un des cycles est aromatique, et au moins un des atomes de cycles est un hétéroatome sélectionné parmi N, O et S.

Par « atome d'halogène », on entend selon l'invention un atome choisi dans le groupe constitué par le fluor, le chlore, le brome et l'iode.

Par « haloalkyle », on entend selon l'invention un groupe alkyle, substitué par un ou plusieurs atomes d'halogène.

Selon un mode de réalisation spécifique, la quantité de photoinitiateur cationique **C** est comprise entre 0,05 et 10% en poids par rapport au poids total de la composition silicone photoréticulable **Y,** de préférence entre 0,1 et 5% en poids, et encore plus préférentiellement entre 0,15 et 3% en poids.

Selon un mode de réalisation particulier, la composition silicone photoréticulable **Y** est de préférence exempte de catalyseur à base de platine, de palladium, de ruthénium ou de rhodium. Par « exempte », on entend que la composition silicone photoréticulable **Y** comprend moins de 0,1% en poids de catalyseur à base de platine, de palladium, de ruthénium ou de rhodium, de préférence moins de 0,01% en poids, et plus préférentiellement moins de 0,001% en poids, par rapport au poids total de la composition.

La composition silicone photoréticulable **Y** peut comprendre une charge **D.** La charge **D** permet d'améliorer les propriétés mécaniques de l'article en élastomère silicone obtenu à l'issue de la méthode, tout en conservant de bonnes propriétés élastomères. En particulier, la charge **D** permet d'améliorer le module à la rupture de l'article en élastomère silicone obtenu, tout en conservant une élongation à la rupture élevée.

La charge **D** éventuellement prévue est de préférence minérale. La charge **D** peut être un produit très finement divisé dont le diamètre particulaire moyen est inférieur à 0,1 µm. La charge **D** peut être notamment siliceuse. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 µm (micromètres) et une surface spécifique BET supérieure à 30 m²/g, de préférence comprise entre 30 et 350 m²/g. Les charges siliceuses semi-renforçantes telles que des terres de diatomées ou du quartz broyé, peuvent être également employées. Ces silices peuvent être incorporées telles quelles ou après avoir été traitées par des composés organosiliciques habituellement utilisés pour cet usage. Parmi ces composés figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. En ce qui concerne les matières minérales non siliceuses, elles peuvent intervenir comme charge minérale semi-renforçante ou de bourrage. Des exemples de ces charges non siliceuses utilisables seules ou en mélange sont le carbonate de calcium, éventuellement traité en surface par un acide organique ou par un ester d'un acide organique, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum et les microbilles de verre. Ces charges sont plus grossières avec généralement un diamètre particulaire moyen supérieur à 0,1 µm et une surface spécifique généralement inférieure à 30 m²/g. Ces charges peuvent avoir été modifiées en surface par traitement avec les divers composés organosiliciques habituellement employés pour cet usage. Sur le plan pondéral, on préfère mettre en oeuvre une quantité de charge comprise entre 0,1% et 50% en poids, de préférence entre 1% et 20% en poids par rapport à l'ensemble des constituants de la composition silicone photoréticulable **Y.**

Avantageusement, la composition silicone photoréticulable **Y** comprend entre 0,1 et 15% en poids d'une charge **D,** de préférence entre 1 et 12%.

La composition silicone photoréticulable **Y** peut comprendre un photosensibilisateur **E.** Le photosensibilisateur **E** absorbe de l'énergie de l'irradiation et la transfère sous forme d'énergie ou sous forme d'un électron au photoinitiateur cationique **C.** Avantageusement, le photosensibilisateur absorbe l'énergie de l'irradiation à une longueur d'onde plus élevée que le photoinitiateur cationique **C,** cela permet d'utiliser une source d'irradiation ayant une longueur d'onde plus élevée que celle à laquelle le photoinitiateur cationique **C** est activé. L'utilisation d'un photosensibilisateur **E** est particulièrement adaptée à l'utilisation d'une lampe LED comme source d'irradiation, par exemple une lampe LED ayant une longueur d'onde de 355, 365, 385 ou 405 nm.

Avantageusement, le photosensibilisateur **E** est choisi parmi les naphtalènes, les anthracènes, les pyrènes, les phénothiazines, les xanthones, les thioxanthones, les benzophénones, l'acétophénone, les carbazoles, les anthraquinones, les fluorénones, les oxydes d'acylphosphine, la camphorquinone et leurs mélanges.

Selon un mode de réalisation particulier, le photosensibilisateur **E** est choisi dans le groupe constitué de anthracène, naphthalène, pérylène, pyrène, phénothiazine, 9,10-hénantrènequinone, bianthrone, anthrone, 9-butoxyanthracène, 1-éthyl-9,10-diméthoxyanthracène, acridine orange, benzoflavine, 1-éthyl-9-éthoxyanthracène, 1-éthyl-9,10-diméthoxyanthracène, 2-isopropylthioxanthrone 2-chlorothioxanthrone, 4,4'-bis(diméthylamino)benzophénone, 4,4'-bis(diéthylamino)benzophénone, 4-diméthylaminobenzophénone et leurs mélanges, de préférence, le photosensibilisateur E est le 2-isopropylthioxanthone.

La composition silicone photoréticulable **Y** peut comprendre entre 0,001 et 1% en poids de photosensibilisateur **E** par rapport au poids total de la composition silicone photoréticulable **Y,** de préférence entre 0,002 et 0,5% en poids, et encore plus préférentiellement entre 0,005 et 0,1% en poids. La composition silicone photoréticulable **Y** peut comprendre entre 0,001 et 0,1% en poids de photosensibilisateur **E.**

La composition silicone photoréticulable **Y** peut comprendre un photoabsorbeur **F.** le photoabsorbeur **F** permet de réduire la pénétration de l'irradiation dans la couche de composition silicone réticulable **Y** et ainsi d'améliorer la résolution de l'article en élastomère silicone obtenu. Il permet de contrôler la profondeur de pénétration de l'irradiation (Dp) dans la couche de silicone élastomère **Y.**

La composition silicone photoréticulable **Y** comprend entre 0,01 et 5% en poids de photoabsorbeur **F** par rapport au poids total de la composition silicone photoréticulable **Y,** et de préférence le photoabsorbeur **F** est choisi parmi le groupe constitué par TiO2, ZnO, les hydroxyphényl-s-triazines, les hydroxyphényl-benzotriazoles, les cyano-acrylates, et leurs mélanges.

La composition silicone photoréticulable **Y** peut également comprendre des pigments **G** organiques ou inorganiques.

La composition silicone photoréticulable **Y** peut également comprendre au moins un composé organique **H** comprenant une fonction époxy et/ou une fonction vinyloxy.

La composition silicone photoréticulable **Y** peut avoir une viscosité dynamique de l'ordre de l'ordre de 1 à 100 000 mPa.s à 25°C, généralement de l'ordre de 10 à 50 000 mPa.s à 25°C, et de préférence l'ordre de 100 à 15 000 mPa.s à 25°C.

Avantageusement, la composition silicone photoréticulable **Y** mise en œuvre dans la méthode comprend :
a. Au moins un organopolysiloxane linéaire **A** de formule générale (I) 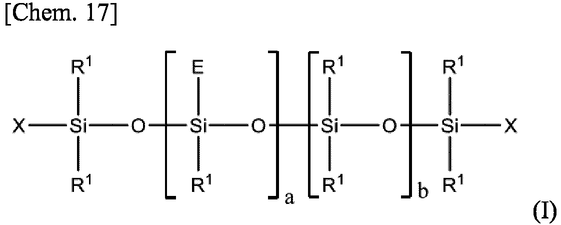
   où chaque groupe R¹ est indépendamment un radical monovalent comprenant de 1 à 30 atomes de carbone, de préférence choisi parmi les alkyles ayant de 1 à 8 atomes de carbone et les aryles ayant de 6 à 12 atomes de carbone, et plus préférentiellement parmi les groupes méthyle, éthyle, propyle, 3,3,3-trifluoropropyle, xylyle, tolyle et phényle;
   E est un groupe comprenant une fonction époxy, où la fonction époxy est liée à un atome de silicium par un radical divalent comprenant de 2 à 20 atomes de carbone et éventuellement 1 ou plusieurs hétéroatome, de préférence l'oxygène ;
   chaque groupe X est indépendamment R¹ ou E ;
   a + b ≥ 150; de préférence 2 000 ≥ a + b ≥ 150 ;
   ledit organopolysiloxane **A** ayant au moins 2 groupes E comprenant une fonction époxy, et
   ledit organopolysiloxane **A** ayant une teneur molaire en fonction époxy inférieure ou égale à 18 mmol/100g d'organopolysiloxane **A,** de préférence inférieure ou égale à 15 mmol/100g d'organopolysiloxane **A;**
b. Eventuellement au moins un organopolysiloxane linéaire **B** de formule générale (I) où
   a + b ≤100 ; de préférence 1 ≤ a + b ≤ 100 ;
   ledit organopolysiloxane **B** ayant au moins 2 groupes E comprenant une fonction époxy ,et
   ledit organopolysiloxane **B** ayant une teneur molaire en fonction époxy supérieure ou égale à 20 mmol/100g d'organopolysiloxane **B** ;
c. Au moins un photoinitiateur cationique **C** ;
d. Eventuellement une charge **D,**
e. Eventuellement un photosensibilisateur **E,** et
f. Eventuellement un photoabsorbeur F.

### Composition silicone photoréticulable Y'

L'invention concerne également une composition silicone photoréticulable **Y'** comprenant :
a. Au moins 75% en poids d'un organopolysiloxane linéaire **A'** de formule générale (I) 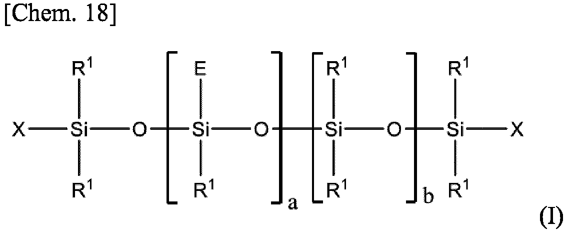
   où chaque groupe R¹ est indépendamment un radical monovalent comprenant de 1 à 30 atomes de carbone, de préférence choisi parmi les alkyles ayant de 1 à 8 atomes de carbone et les aryles ayant de 6 à 12 atomes de carbone, et plus préférentiellement parmi les groupes méthyle, éthyle, propyle, 3,3,3-trifluoropropyle, xylyle, tolyle et phényle;
   E est un groupe comprenant une fonction polymérisable et/ou réticulable par voie cationique, de préférence une fonction époxy ou vinyloxy, où la fonction polymérisable et/ou réticulable par voie cationique est liée à un atome de silicium par un radical divalent comprenant de 2 à 20 atomes de carbone et éventuellement 1 ou plusieurs hétéroatome, de préférence l'oxygène ;
   chaque groupe X est indépendamment R¹ ou E ;
   a + b ≥ 200 ; de préférence 2 000 ≥ a + b ≥ 200 ;
   ledit organopolysiloxane **A'** ayant au moins 2 groupes E à fonction polymérisable et/ou réticulable par voie cationique, et
   ledit organopolysiloxane **A'** ayant une teneur molaire en fonction polymérisable et/ou réticulable par voie cationique inférieure ou égale à 18 mmol/100g d'organopolysiloxane **A',** de préférence inférieure ou égale à 15 mmol/100g d'organopolysiloxane **A'** ;
b. Entre 1 et 20% en poids d'un organopolysiloxane linéaire **B'** de formule générale (I) où
   a + b ≤150 ; de préférence 1 ≤ a + b ≤ 100 ;
   ledit organopolysiloxane **B'** ayant au moins 2 groupes E comprenant une fonction polymérisable et/ou réticulable par voie cationique, de préférence une fonction époxy ou vinyloxy, et
   ledit organopolysiloxane **B'** ayant une teneur molaire en fonction polymérisable et/ou réticulable par voie cationique supérieure ou égale à 20 mmol/100g d'organopolysiloxane **B'** ; et
c. Au moins un photoinitiateur cationique **C.**

La composition silicone photoréticulable **Y'** est capable d'être réticulée en élastomère silicone par photopolymérisation.

La teneur molaire en fonction polymérisable et/ou réticulable par voie cationique de l'organopolysiloxane **A'** est inférieure ou égale à 18 mmol/100g d'organopolysiloxane **A',** de préférence inférieure ou égale à 15 mmol/100g d'organopolysiloxane **A'.** La teneur molaire en fonction polymérisable et/ou réticulable par voie cationique peut par exemple être comprise entre 0,5 et 18 mmol/100g d'organopolysiloxane **A,** ou entre 1 et 15 mmol/100g d'organopolysiloxane **A'.**

Dans un mode de réalisation particulier, l'organopolysiloxane de formule **A'** est un organopolysiloxane de formule (I) où 1 000 ≥ a + b ≥ 200.

L'organopolysiloxane **A'** est constitué de motifs siloxyles « D » choisis parmi le groupe constitué par les motifs siloxyles D: R¹₂SiO_{2/2} et D^{E}: ER¹SiO_{2/2}, et de motifs siloxyles « M » choisis parmi le groupe constitué par les motifs siloxyles M^{E}: ER¹₂SiO_{1/2}. Les symboles R¹ et E sont tels que décrits ci-dessus.

L'organopolysiloxane linéaire **A'** comprend de préférence 2 groupes E comprenant une fonction polymérisable et/ou réticulable par voie cationique.

Avantageusement, l'organopolysiloxane **A'** est un organopolysiloxane de formule (I) où a=0. Les groupes E comprenant une fonction polymérisable et/ou réticulable par voie cationique sont alors en bout de chaine et l'organopolysiloxane **A** peut avoir une formule générale M^{E}DₓM^{E} avec x ≥ 200.

L'organopolysiloxane **A'** peut être une huile de viscosité dynamique de l'ordre de 1 à 100 000 mPa.s à 25°C, généralement de l'ordre de 10 à 70 000 mPa.s à 25°C, de préférence l'ordre de 10 à 30 000 mPa.s à 25°C, et encore plus préférentiellement de l'ordre de 500 à 20 000 mPa.s à 25°C.

La composition silicone photoréticulable **Y'** comprend au moins 75% en poids d'organopolysiloxane **A'** par rapport au poids total de la composition silicone photoréticulable **Y',** de préférence entre 75 et 99% en poids, et plus préférentiellement entre 75 et 90% en poids.

L'organopolysiloxane linéaire **B'** possède une chaine plus courte que l'organopolysiloxane **A'** et une teneur molaire en fonction polymérisable et/ou réticulable par voie cationique plus élevée. Cela permet d'améliorer les propriétés mécaniques de l'élastomère silicone obtenu à l'issue de la photopolymérisation, tout en conservant de bonnes propriétés élastomères. En effet, le module à la rupture et la dureté de l'élastomère silicone obtenu sont augmentés, tout en conservant une élongation à la rupture élevée.

La teneur molaire en fonction polymérisable et/ou réticulable par voie cationique de l'organopolysiloxane **B'** est supérieure ou égale à 20 mmol/100g d'organopolysiloxane **B',** de préférence supérieure ou égale à 50 mmol/100g d'organopolysiloxane **B',** et plus préférentiellement supérieure ou égale à 80 mmol/100g d'organopolysiloxane **B'.** La teneur molaire en fonction polymérisable et/ou réticulable par voie cationique de l'organopolysiloxane **B'** peut par exemple être comprise entre 20 et 500 mmol/100g, ou entre 50 et 250 mmol/100g d'organopolysiloxane **B'.**

L'organopolysiloxane **B'** est constitué de motifs siloxyles « D » choisis parmi le groupe constitué par les motifs siloxyles D: R¹₂SiO_{2/2} et D^{E} : ER¹SiO_{2/2}, et de motifs siloxyles « M » choisis parmi le groupe constitué par les motifs siloxyles M^{E} : ER¹₂SiO_{1/2}. Les symboles R¹ et E sont tels que décrits ci-dessus.

L'organopolysiloxane linéaire **B'** comprend de préférence 2 groupes E comprenant une fonction polymérisable et/ou réticulable par voie cationique.

Dans un mode de réalisation particulier, l'organopolysiloxane **B'** est un organopolysiloxane de formule (I) où a + b ≤ 75 ; de préférence 1 ≤ a + b ≤ 75.

Avantageusement, l'organopolysiloxane **B'** est un organopolysiloxane de formule (I) où a=0. Les groupes E comprenant une fonction polymérisable et/ou réticulable par voie cationique sont alors en bout de chaine et l'organopolysiloxane **B'** peut avoir une formule générale M^{E}DₓM^{E} avec x ≤ 100, de préférence x ≤ 75.

L'organopolysiloxane **B'** peut être une huile de viscosité dynamique de l'ordre de 1 à 100 000 mPa.s à 25°C, généralement de l'ordre de 5 à 70 000 mPa.s à 25°C, et de préférence l'ordre de 10 à 10 000 mPa.s à 25°C.

La composition silicone photoréticulable **Y'** comprend entre 1 et 20% en poids de l'organopolysiloxane **B'** par rapport au poids total de la composition silicone photoréticulable **Y',** de préférence entre 5 et 15% en poids.

La fonction polymérisable et/ou réticulable par voie cationique du groupe E est de préférence choisie parmi les fonctions époxy, vinyloxy, oxétane, et dioxolane. Avantageusement, la fonction polymérisable et/ou réticulable par voie cationique du groupe E est une fonction époxy ou vinyloxy, de préférence une fonction époxy.

Lorsque la fonction polymérisable et/ou réticulable par voie cationique du groupe E est une fonction époxy, les groupes E de l'organopolysiloxane **A'** et/ou de l'organopolysiloxane **B'** sont de préférence choisis parmi les groupes suivants : 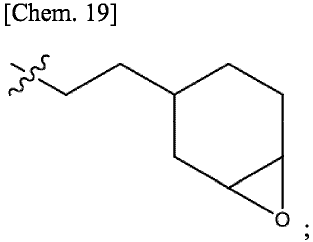 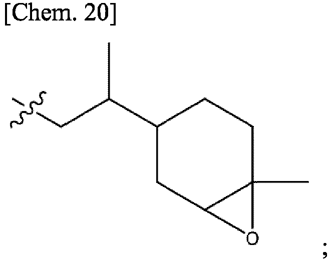 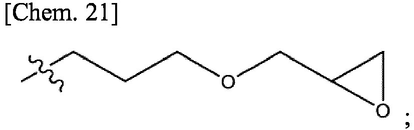 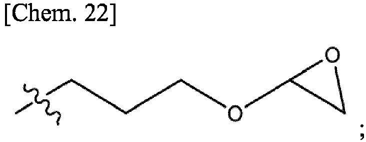 et 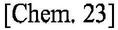 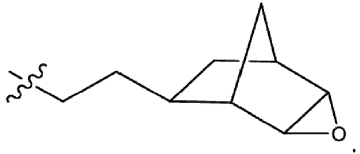 La ligne ondulée représente l'endroit où le groupe E est lié à un atome de silicium de l'organopolysiloxane.

Lorsque la fonction polymérisable et/ou réticulable par voie cationique du groupe E est une fonction vinyloxy, les groupes E de l'organopolysiloxane **A'** et/ou de l'organopolysiloxane **B'** sont de formule (II):

-G-O-CH=CH₂ (II)

dans laquelle G représente un radical divalent comprenant de 2 à 20 atomes de carbone et éventuellement 1 ou plusieurs hétéroatomes, de préférence l'oxygène.

De préférence, le groupe vinyloxy est choisi parmi les groupes suivants :
-(CH₃)₂-O-CH=CH₂ ;
-O-(CH₂)₄-O-CH=CH₂ ; et
-(CH₂)₃-O-R¹¹-O-CH=CH₂, où R¹¹ est un radical divalent choisi parmi les alkylènes linéaires ou ramifiés en C₁-C₁₂, et les arylènes en C₆-C₁₂, de préférence phénylène, les arylènes étant éventuellement substitué par un, deux ou trois groupes alkyle en C₁-C₆.

De préférence, l'organopolysiloxane **A'** et/ou l'organopolysiloxane **B'** est de formule (III) : 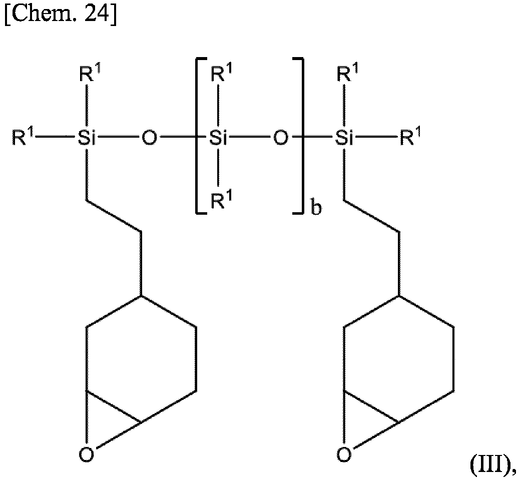 où R¹ est tel que décrit ci-dessus, de préférence R¹ est un groupe méthyle.
Dans le cas de l'organopolysiloxane **A',** b est ≥ 150, de préférence b ≥ 200, et dans le cas de l'organopolysiloxane **B',** b est ≤ 100, de préférence b ≤ 75.

Selon un mode de réalisation spécifique, la quantité de photoinitiateur cationique C est comprise entre 0,05 et 10% en poids par rapport au poids total de la composition silicone photoréticulable **Y,** de préférence entre 0,1 et 5% en poids, et encore plus préférentiellement entre 0,15 et 3% en poids. Le photoinitiateur cationique **C** est tel que décrit ci-dessus pour la composition silicone photoréticulable **Y.**

Selon un mode de réalisation particulier, la composition silicone photoréticulable **Y'** est de préférence exempte de catalyseur à base de platine, de palladium, de ruthénium ou de rhodium. Par « exempte », on entend que la composition silicone photoréticulable **Y'** comprend moins de 0,1% en poids de catalyseur à base de platine, de palladium, de ruthénium ou de rhodium, de préférence moins de 0,01% en poids, et plus préférentiellement moins de 0,001% en poids, par rapport au poids total de la composition.

La composition silicone photoréticulable **Y'** peut comprendre une charge **D.** La charge **D** permet d'améliorer les propriétés mécaniques de l'élastomère silicone obtenu après réticulation, tout en conservant de bonnes propriétés élastomères. En effet, le module à la rupture de l'élastomère silicone obtenu est augmenté, tout en conservant une élongation à la rupture élevée. La charge **D** peut être telle que décrite ci-dessus pour la composition silicone photoréticulable **Y.** La composition silicone photoréticulable **Y'** peut comprendre 1% et 50% en poids, de préférence entre 1% et 20% en poids par rapport à l'ensemble des constituants de la composition silicone photoréticulable **Y'.**

Avantageusement, la composition silicone photoréticulable **Y'** comprend entre 0,1 et 15% en poids d'une charge **D,** de préférence entre 1 et 12%.

La composition silicone photoréticulable **Y'** peut comprendre un photosensibilisateur **E.** Le photosensibilisateur **E** absorbe de l'énergie de l'irradiation et la transfère sous forme d'énergie ou sous forme d'un électron au photoinitiateur cationique **C.** Avantageusement, le photosensibilisant absorbe l'énergie de l'irradiation à une longueur d'onde plus élevée que le photoinitiateur cationique **C,** cela permet d'utiliser une source d'irradiation ayant une longueur d'onde plus élevée que celle à laquelle le photoinitiateur cationique **C** est activé. Le photosensibilisateur **E** peut être tel que décrit ci-dessus pour la composition silicone photoréticulable **Y.** La composition silicone photoréticulable **Y'** peut comprendre entre 0,001 et 0,5% en poids de photosensibilisateur **E** par rapport au poids total de la composition silicone photoréticulable **Y',** de préférence entre 0,005 et 0,1% en poids. La composition silicone photoréticulable **Y'** peut comprendre entre 0,001 et 0,1% en poids de photosensibilisateur **E.**

La composition silicone photoréticulable **Y'** peut comprendre un photoabsorbeur **F.** le photoabsorbeur **F** permet de réduire la pénétration de l'irradiation dans la couche de composition silicone réticulable **Y'** et ainsi d'améliorer l'irradiation. Il permet de contrôler la profondeur de pénétration de l'irradiation (Dp) dans la couche de silicone élastomère silicone photoréticulable **Y'.** La composition silicone photoréticulable **Y'** peut comprendre entre 0,01 et 5% en poids de photoabsorbeur **F** par rapport au poids total de la composition silicone photoréticulable **Y'.** Le photoabsorbeur **F** peut être tel que décrit pour la composition photoréticulable **Y.**

La composition silicone photoréticulable **Y'** peut également comprendre des pigments **G** organiques ou inorganiques.

La composition silicone photoréticulable **Y'** peut également comprendre au moins un composé organique **H** comprenant une fonction époxy et/ou une fonction vinyloxy.

La composition silicone photoréticulable **Y'** peut avoir une viscosité dynamique de l'ordre de l'ordre de 1 à 100 000 mPa.s à 25°C, généralement de l'ordre de 10 à 50 000 mPa.s à 25°C, et de préférence de l'ordre de 100 à 15 000 mPa.s à 25°C.

Avantageusement, la composition silicone photoréticulable **Y'** comprend :
a. Au moins 75% en poids d'un organopolysiloxane linéaire **A'** de formule générale (I) 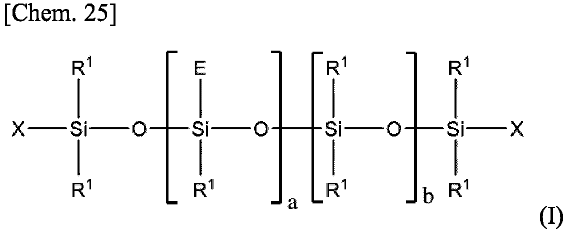
   où chaque groupe R¹ est indépendamment un radical monovalent comprenant de 1 à 30 atomes de carbone, de préférence choisi parmi les alkyles ayant de 1 à 8 atomes de carbone et les aryles ayant de 6 à 12 atomes de carbone, et plus préférentiellement parmi les groupes méthyle, éthyle, propyle, 3,3,3-trifluoropropyle, xylyle, tolyle et phényle;
   E est un groupe comprenant une fonction époxy, où la fonction époxy est liée à un atome de silicium par un radical divalent comprenant de 2 à 20 atomes de carbone et éventuellement 1 ou plusieurs hétéroatome, de préférence l'oxygène ;
   chaque groupe X est indépendamment R¹ ou E ;
   a + b ≥ 200 ; de préférence 2 000 ≥ a + b ≥ 200 ;
   ledit organopolysiloxane **A'** ayant au moins 2 groupes E à fonction époxy, et
   ledit organopolysiloxane **A'** ayant une teneur molaire en fonction époxy inférieure ou égale à 18 mmol/100g d'organopolysiloxane **A',** de préférence inférieure ou égale à 15 mmol/100g d'organopolysiloxane **A' ;**
b. Entre 1 et 20% en poids d'un organopolysiloxane linéaire **B'** de formule générale (I) où
   a + b ≤150 ; de préférence 1 ≤ a + b ≤ 100 ;
   ledit organopolysiloxane **B'** ayant au moins 2 groupes E comprenant une fonction époxy, et
   ledit organopolysiloxane **B'** ayant une teneur molaire en fonction époxy supérieure ou égale à 20 mmol/100g d'organopolysiloxane **B'** ; et
c. Au moins un photoinitiateur cationique **C.**

L'invention concerne également l'utilisation d'une composition silicone photoréticulable **Y'** pour la fabrication additive d'un article en élastomère silicone. La fabrication additive est effectuée par photopolymérisation en cuve, de préférence par stéréolithographie laser (SLA), par impression 3D par traitement numérique de la lumière (DLP), ou par production par interface de liquide continu (ou CLIP).

L'invention concerne également un silicone élastomère obtenu par réticulation de la composition silicone photoréticulable **Y'.**

### Exemples

*Matières premières utilisées*
**Huile A1** : organopolysiloxane à fonction époxy de formule M^{Epoxy}DₓM^{Epoxy} avec x = 590, ayant une masse molaire de 44 000 g/mol, une viscosité de 9 150 mPa.s et une teneur molaire en fonction époxy de 4,55 mmol pour 100g d'huile A1 ;
**Huile A2 :** organopolysiloxane à fonction époxy de formule M^{Epoxy}DₓM^{Epoxy} avec x = 227, ayant une masse molaire de 17 200 g/mol, une viscosité de 1 000 mPa.s et une teneur molaire en fonction époxy de 11,53 mmol pour 100g d'huile A2 ;
**Huile A3** : organopolysiloxane à fonction époxy de formule MD₅₃₀D^{Epoxy}₉M, ayant une masse molaire de 41 600 g/mol, une viscosité de 5 000 mPa.s et une teneur molaire en fonction époxy de 21,64 mmol pour 100g d'huile A3 ;
**Photoinitiateur cationique C** : Photoamorceur cationique de formule (VI) 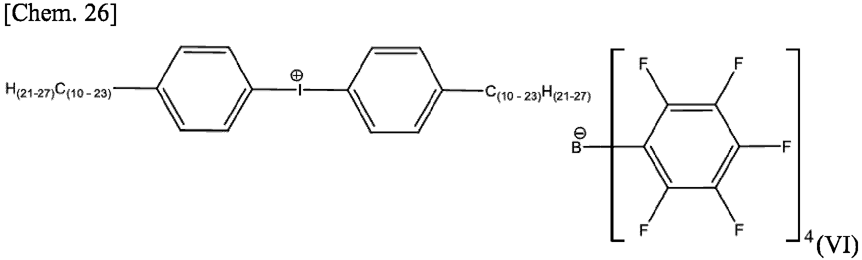 dans de l'octyldodécanol ;
**Photo sensibilisateur E** : ITX Isopropyl- thioxanthone (**CAS** n° 5495-84-1) ;
**Huile B** : organopolysiloxane à fonction époxy de formule M^{Epoxy}D₂₁M^{Epoxy}, ayant une masse molaire de 1 950 g/mol, une viscosité de 50 mPa.s et une teneur molaire en fonction époxy de 102,6 pour 100g d'huile B
**Charge D1** : Silice pyrogénée traitée avec de l'octamethyltetrasiloxane ;
**Charge D2 :** Silice non traitée (A200) ;
**Photoabsorbeur** F : TiO₂ (KronoClean 7000).

Différentes compositions ont été préparées avec ces produits. Toutes les quantités sont exprimées en pourcentage en poids par rapport au poids total de la composition.

### Compositions 1-9 et composition comparative 1

Les compositions 1-9 et la composition comparative 1 ont été préparées en mélangeant tous les composants manuellement ou au speed mixer. Les compositions ont ensuite été dégazées à l'aide d'une cloche sous vide durant 5 à 10 min. Une partie de chacune des compositions a été coulée dans un moule de 2 mm d'épaisseur et a été passée sur une unité de laboratoire constituée d'un convoyeur équipé de lampes UV pour obtenir des plaques qui ont servi aux essais mécaniques après réticulation.

Conditions opératoires de l'unité de laboratoire :
i. Vitesse : 10 m/min
ii. Lampe : H-bulb, ampoule à vapeur de mercure moyenne pression produisant une sortie spectrale de mercure conventionnelle,
iii. Puissance : 15 A
iv. Pas d'inertage du produit
v. 1 passage

Les propriétés mécaniques de ces compositions ont été mesurées sur un Dynamomètre INSTRON 5544 à 500mm/min selon la norme ASTM D412-méthode A.

Les différentes compositions et les résultats des essais mécaniques sont présentés dans le tableau 1.

**[Tableau 1]**

| Composants | Compo .1 | Compo .2 | Compo .3 | Compo .4 | Compo .5 | Compo .6 | Compo .7 | Compo. 8 | Compo. 9 | Compo Comp.1 |
|---|---|---|---|---|---|---|---|---|---|---|
| Huile A1 | 99% | | 40% | 94% | 84% | | | | | |
| Huile A2 | | 99% | 49% | | | 94% | 84% | 89% | 89% | |
| Huile A3 | | | | | | | | | | 99% |
| Huile B | | | | 5% | 15% | 5% | 15% | | | |
| Charge D1 | | | | | | | | 10% | | |
| Charge D2 | | | | | | | | | 10% | |
| Photoinitiateur C | 1% | 1% | 1% | 1% | 1% | 1% | 1% | 1% | 1% | 1% |
| Propriétés | | | | | | | | | | |
| Epaisseur (mm) | 1,5 | 1,37 | 1,44 | 1,33 | 1,41 | 1,33 | 1,54 | 1,71 | 1,61 | 1,58 |
| Elongation à la rupture (%) | 254 | 125 | 180 | 137 | 100 | 141 | 100 | 200 | 225 | 25 |
| Module à 100% (MPa) | 0,14 | 0,34 | 0,6 | 0,23 | 0,41 | 0,38 | 0,59 | 0,91 | 0,73 | ND^{*} |
| Module à la rupture (MPa) | 0,24 | 0,39 | 0,99 | 0,28 | 0,4 | 0,47 | 0,59 | 1,61 | 1,56 | 0,31 |
| Dureté S00 | 51 | 61 | ND | 68 | 75 | 75 | 80 | ND | ND | ND |
| Viscosité mPa.s | 13 000 | 1 200 | ND | 12 000 | 8 000 | 1 140 | 900 | ND | ND | ND |

| | | | | | | | | | | |
|---|---|---|---|---|---|---|---|---|---|---|
| *ND : non mesuré | | | | | | | | | | |

Ces résultats montrent que toutes les compositions 1-9 selon l'invention sont des élastomères qui présentent une élongation à la rupture élevée, d'environ 100%, voire plus. Ces résultats montrent également qu'il est nécessaire d'utiliser une composition comprenant un organopolysiloxane à chaine longue ayant une teneur faible en fonction polymérisable et/ou réticulable par voie cationique pour obtenir de bonnes propriétés élastomères. En effet, lorsqu'un organopolysiloxane ayant une teneur élevée en fonction polymérisable et/ou réticulable par voie cationique est utilisé, l'élongation à la rupture est très faible, il n'a donc pas de bonnes propriétés élastomères (composition comparative 1). L'ajout d'une huile **B** plus courte ayant une teneur molaire en fonction polymérisable et/ou réticulable par voie cationique plus élevée (compositions 4-7) ou d'une charge (compositions 8-9) permet d'améliorer les propriétés mécaniques des élastomères obtenues, tout en conservant de bonnes propriétés élastomères. En effet, le module à la rupture et la dureté sont améliorés et l'élongation à la rupture reste élevée pour ces compositions.

### Compositions 10-12

Les compositions 10-12 ont été préparées de la même façon en mélangeant tous les composants puis en dégazant les compositions obtenues. Dans le cas de la composition 10, l'irradiation a été effectuée avec une lampe UV Mercure, et dans le cas des compositions 11 et 12, avec une lampe LED ayant une longueur d'onde de 365 nm.

La réactivité sous irradiation UV lampe Mercure et à 365 nm a été mesurée par photo-DSC (Metler Toledo LA 61310) de la façon suivante : irradiation de l'échantillon après 1 minute de stabilisation avec une lampe Hamamatsu LC8-02 réglée à 1%. Pour les irradiations dans la gamme des UV LED à 365 nm un filtre d'Hamamatsu A9616-07 est placé (dose UV à 365 nm mesurée dans ces conditions : 0,5 mW/cm2).

Les différentes compositions et les résultats des essais mécaniques sont présentés dans le tableau 2.

**[Tableau 2]**

| Composants | Compo. 10 Lampe UV mercure | Compo 11 Lampe LED | Compo. 12 Lampe LED |
|---|---|---|---|
| Huile A2 | 89,15% | 89,15 | 89,12% |
| Huile B | 10% | 10% | 10% |
| Photosensibilisateur E | | | 0,0267% |
| Photoinitiateur cationique C | 0,85% | 0,85 | 0,85% |
| Propriétés | | | |
| Réticulation : O/N (Temps de réaction en min) | Oui (0,41) | Non | Oui (1,53) |

Ces résultats montrent qu'il est possible d'utiliser différents types d'irradiation pour réticuler les compositions selon l'invention. Dans le cas d'une irradiation par LED à 365 nm, il est nécessaire d'utiliser un photosensibilisateur pour que la réaction de réticulation ait lieu (compositions 11 et 12).

### Compositions 13-16

Les compositions 13-16 ont été préparées de la même façon en mélangeant tous les composants puis en dégazant les compositions obtenues.

La profondeur efficace de pénétration des rayons (profondeur jusqu'à laquelle la composition réticule) a été mesurée en fixant le temps d'exposition d'1 seconde ou 3 secondes et en faisant varier la puissance de la source UV pour ce temps d'irradiation fixé. Une fois le film formé, il est mesuré à l'aide d'un micromètre ce qui nous permet de déterminer la profondeur de couche formée en fonction de la dose UV pour chaque composition

Les différentes compositions et les résultats obtenus sont présentés dans le tableau 3.

**[Tableau 3]**

| Composants | Compo.13 | Compo.14 | Compo.15 | Compo.16 |
|---|---|---|---|---|
| Huile A2 | 79,22% | 78,80% | 79,20% | 78,78 |
| Huile B | 10,00% | 9,95% | 9.99% | 9,94 |
| Charge D2 | 10,00% | 9,95% | 9.99% | 9,94 |
| Photosensibilisateur E | 0,01% | 0,01% | 0,050% | 0,04 |
| Photoinitiateur C | 0,77% | 0,80% | 0,77% | 0,80 |
| Photoabsorbeur F | | 0,50% | | 0,50 |
| Propriétés | | | | |
| Profondeur de réticulation en microns (irradiation avec une lampe UV ayant une puissance de 95,9 mW/cm² pendant 1s) | | | 470 | 300 |
| Profondeur de réticulation en microns (irradiation avec une lampe UV ayant une puissance de 76,3 mW/cm² pendant 3s) | 1 000+ | 470 | | |

Ces résultats montrent qu'il est possible de moduler la profondeur de réticulation.. L'ajout d'un photoabsorbeur F dans la composition permet de réduire la pénétration des rayons et ainsi d'obtenir une meilleure résolution d'impression. Ceci permet d'obtenir des formulations qui sont compatibles avec l'impression 3D, et qui ont une bonne résolution d'impression.

Par ailleurs, les propriétés mécaniques de la composition 13 ont également été mesurées suivant la méthode décrite ci-dessus. Les résultats sont présentés dans le tableau 4.

**[Tableau 4]**

| Propriétés | Compo.13 |
|---|---|
| Elongation à la rupture (%) | 145 |
| Module à 100% (MPa) | 1,73 |
| Module à la rupture (MPa) | 2,47 |
| Dureté (Shore A) | 37 |
| Viscosité mPa.s | 6 000 |

Ces résultats montrent qu'il est possible d'obtenir des formulations qui sont compatibles avec l'impression 3D, pour imprimer des pièces élastomères ayant de bonnes propriétés mécaniques et une bonne définition.

## Revendications

1. Méthode de fabrication additive par photopolymérisation en cuve pour produire un article en élastomère silicone, ladite méthode comprenant les étapes suivantes :
i. Mettre en œuvre une composition silicone photoréticulable **Y** et une source d'irradiation, ladite composition silicone photoréticulable **Y** comprenant :
a. Au moins un organopolysiloxane linéaire **A** de formule générale (I) 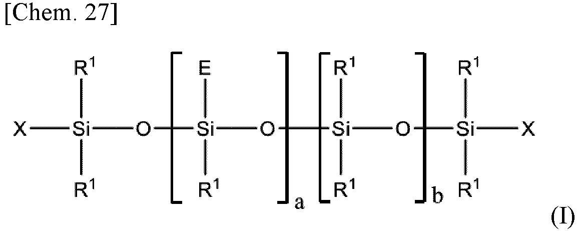
où chaque groupe R¹ est indépendamment un radical monovalent comprenant de 1 à 30 atomes de carbone, de préférence choisi parmi les alkyles ayant de 1 à 8 atomes de carbone et les aryles ayant de 6 à 12 atomes de carbone, et plus préférentiellement parmi les groupes méthyle, éthyle, propyle, 3,3,3-trifluoropropyle, xylyle, tolyle et phényle;
E est un groupe comprenant une fonction polymérisable et/ou réticulable par voie cationique, de préférence une fonction époxy ou vinyloxy, où la fonction polymérisable et/ou réticulable par voie cationique est liée à un atome de silicium par un radical divalent comprenant de 2 à 20 atomes de carbone et éventuellement 1 ou plusieurs hétéroatomes, de préférence l'oxygène ;
chaque groupe X est indépendamment R¹ ou E ;
a + b ≥ 150; de préférence 2 000 ≥ a + b ≥ 150 ;
ledit organopolysiloxane **A** ayant au moins 2 groupes E à fonction polymérisable et/ou réticulable par voie cationique, et
ledit organopolysiloxane **A** ayant une teneur molaire en fonction polymérisable et/ou réticulable par voie cationique inférieure ou égale à 18 mmol/100g d'organopolysiloxane **A** , de préférence inférieure ou égale à 15 mmol/100g ;
b. Eventuellement au moins un organopolysiloxane linéaire **B** de formule générale (I) où
a + b ≤ 100 ; de préférence 1 ≤ a + b ≤ 100 ;
ledit organopolysiloxane **B** ayant au moins 2 groupes E à fonction polymérisable et/ou réticulable par voie cationique, de préférence une fonction époxy ou vinyloxy , et
ledit organopolysiloxane **B** ayant une teneur molaire en fonction polymérisable et/ou réticulable par voie cationique supérieure ou égale à 20 mmol/100g d'organopolysiloxane **B ;**
c. Au moins un photoinitiateur cationique **C;**
d. Eventuellement une charge **D,**
e. Eventuellement un photosensibilisateur **E,** et
f. Eventuellement un photoabsorbeur **F,**
ii. Irradier sélectivement au moins une partie de la composition silicone photoréticulable **Y** au moyen de la source d'irradiation pour former une partie de l'article en élastomère silicone ; et
iii. Répéter l'étape ii) un nombre de fois suffisant pour produire l'article en élastomère silicone.

2. Méthode de fabrication additive pour produire un article en élastomère silicone selon la revendication 1 **caractérisée en ce que** la composition silicone photoréticulable **Y** comprend au moins 75% en poids d'organopolysiloxane **A.**

3. Méthode de fabrication additive pour produire un article en élastomère silicone selon l'une des revendications précédentes **caractérisée en ce que** l'organopolysiloxane **A** est un organopolysiloxane de formule (I) où a=0.

4. Méthode de fabrication additive pour produire un article en élastomère silicone selon l'une des revendications précédentes **caractérisée en ce que** la composition silicone photoréticulable **Y** comprend entre 1 et 20% en poids de l'organopolysiloxane **B.**

5. Méthode de fabrication additive pour produire un article en élastomère silicone selon l'une des revendications précédentes **caractérisée en ce que** la fonction polymérisable et/ou réticulable par voie cationique du groupe E est une fonction époxy, et de préférence, les groupes E de l'organopolysiloxane **A** et/ou de l'organopolysiloxane **B** sont choisis parmi les groupes suivants : 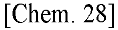 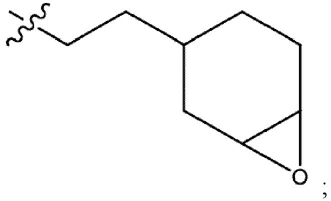 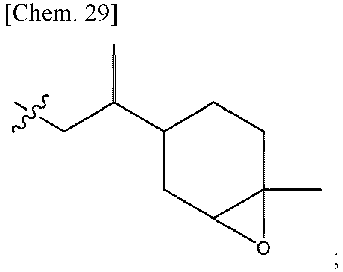 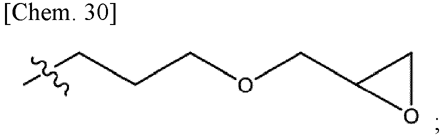 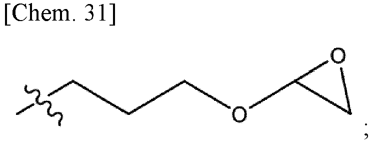 et

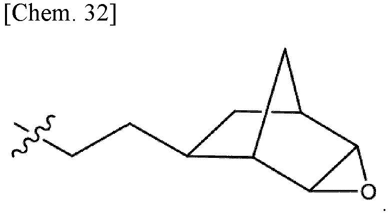

6. Méthode de fabrication additive pour produire un article en élastomère silicone selon l'une des revendications précédentes **caractérisée en ce que** la quantité de photoinitiateur cationique **C** est comprise entre 0,05 et 10% en poids, de préférence entre 0,1 et 5% en poids, et encore plus préférentiellement entre 0,15 et 3% en poids de la composition silicone photoréticulable **Y.**

7. Méthode de fabrication additive pour produire un article en élastomère silicone selon l'une des revendications précédentes **caractérisée en ce que** la composition silicone photoréticulable **Y** comprend entre 0,1 et 15% en poids d'une charge **D,** et de préférence, la charge **D** est choisie dans le groupe constitué par les matières siliceuses.

8. Méthode de fabrication additive pour produire un article en élastomère silicone selon l'une des revendications précédentes **caractérisée en ce que** la source d'irradiation est une lampe LED, de préférence une lampe LED ayant une longueur d'onde de 355, 365, 385 ou 405 nm.

9. Composition silicone photoréticulable **Y'** comprenant :
a. Au moins 75% en poids d'un organopolysiloxane linéaire **A'** de formule générale (I) 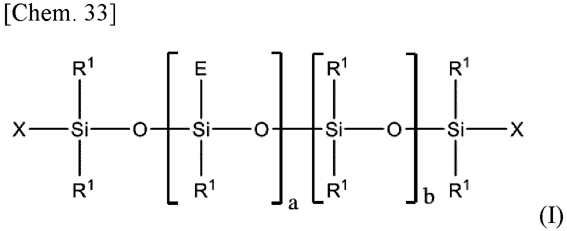
où chaque groupe R¹ est indépendamment un radical monovalent comprenant de 1 à 30 atomes de carbone, de préférence choisi parmi les alkyles ayant de 1 à 8 atomes de carbone et les aryles ayant de 6 à 12 atomes de carbone, et plus préférentiellement parmi les groupes méthyle, éthyle, propyle, 3,3,3-trifluoropropyle, xylyle, tolyle et phényle;
E est un groupe comprenant une fonction polymérisable et/ou réticulable par voie cationique, de préférence une fonction époxy ou vinyloxy, où la fonction polymérisable et/ou réticulable par voie cationique est liée à un atome de silicium par un radical divalent comprenant de 2 à 20 atomes de carbone et éventuellement 1 ou plusieurs hétéroatome, de préférence l'oxygène ;
chaque groupe X est indépendamment R¹ ou E ;
a + b ≥ 200 ; de préférence 2 000 ≥ a + b ≥ 200 ;
ledit organopolysiloxane **A'** ayant au moins 2 groupes E à fonction polymérisable et/ou réticulable par voie cationique, et
ledit organopolysiloxane **A'** ayant une teneur molaire en fonction polymérisable et/ou réticulable par voie cationique inférieure ou égale à 18 mmol/100g d'organopolysiloxane **A'** , de préférence inférieure ou égale à 15 mmol/100g ;
b. Entre 1 et 20% en poids d'un organopolysiloxane linéaire **B'** de formule générale (I) où
a + b ≤ 150 ; de préférence 1 ≤ a + b ≤ 100 ;
ledit organopolysiloxane **B'** ayant au moins 2 groupes E à fonction polymérisable et/ou réticulable par voie cationique, de préférence une fonction époxy ou vinyloxy, et
ledit organopolysiloxane **B'** ayant une teneur molaire en fonction polymérisable et/ou réticulable par voie cationique supérieure ou égale à 20 mmol/100g d'organopolysiloxane **B'** ; et
c. Un moins un photoinitiateur cationique **C;**

10. Composition silicone photoréticulable **Y'** selon la revendication 9 **caractérisée en ce que** l'organopolysiloxane **A'** est un organopolysiloxane de formule (I) où a=0.

11. Composition silicone photoréticulable **Y'** selon l'une des revendications 9 à 10 **caractérisée en ce que** la fonction polymérisable et/ou réticulable par voie cationique du groupe E est une fonction époxy, et de préférence, les groupes E de l'organopolysiloxane **A'** et /ou de l'organopolysiloxane **B'** sont choisis parmi les groupes suivants : 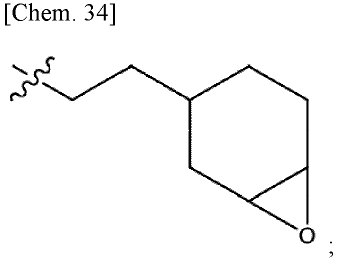 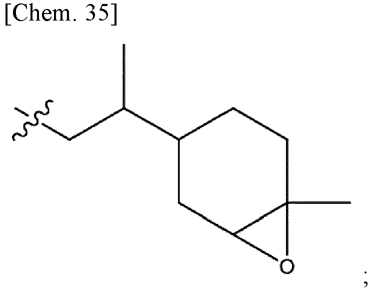 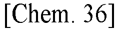 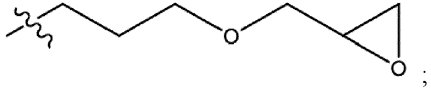 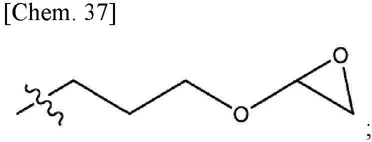 et

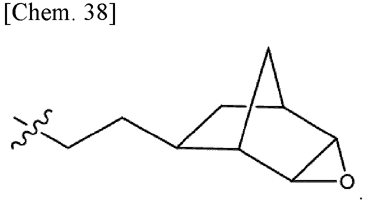

12. Composition silicone photoréticulable **Y'** selon l'une des revendications 9 à 11 **caractérisée en ce que** la quantité de photoinitiateur cationique **C** est comprise entre 0,05 et 10% en poids, de préférence entre 0,1 et 5% en poids, et encore plus préférentiellement entre 0,15 et 3% en poids.

13. Composition silicone photoréticulable **Y'** selon l'une des revendications 9 à 12 **caractérisée en ce qu'**elle comprend en outre entre 0,1 et 15% en poids d'une charge **D, et** de préférence, la charge **D** est choisie dans le groupe constitué par les matières silicieuses.

14. Utilisation d'une composition silicone photoréticulable **Y'** selon l'une des revendications 9 à 13 pour la fabrication d'un article en élastomère silicone.

15. Elastomère silicone obtenu par réticulation d'une composition silicone photoréticulable **Y'** selon l'une des revendications 9 à 13.

## Patentansprüche

1. Verfahren zur additiven Herstellung durch Photopolymerisation in einem Behälter zur Herstellung eines Silikonelastomerartikels, wobei das Verfahren die folgenden Schritte umfasst:
i. Bereitstellen einer photovernetzbaren Silikonzusammensetzung **Y** und einer Strahlungsquelle, wobei die photovernetzbare Silikonzusammensetzung **Y** umfasst:
a. wenigstens ein lineares Organopolysiloxan **A** der allgemeinen Formel (I) 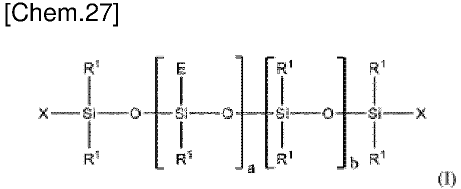
wobei jede Gruppe R¹ unabhängig ein einwertiger Rest mit 1 bis 30 Kohlenstoffatomen ist, bevorzugt gewählt aus Alkylen mit 1 bis 8 Kohlenstoffatomen und Arylen mit 6 bis 12 Kohlenstoffatomen, und stärker bevorzugt aus Methyl-, Ethyl-, Propyl-, 3,3,3-Trifluorpropyl-, Xylyl-, Tolyl- und Phenylgruppen;
wobei E eine Gruppe ist, die eine kationisch polymerisierbare und/oder vernetzbare Funktion umfasst, bevorzugt eine Epoxy- oder Vinyloxyfunktion, wobei die kationisch polymerisierbare und/oder vernetzbare Funktion über einen zweiwertigen Rest mit 2 bis 20 Kohlenstoffatomen und gegebenenfalls 1 oder mehreren Heteroatomen an ein Siliciumatom gebunden ist, bevorzugt Sauerstoff;
wobei jede Gruppe X unabhängig R¹ oder E ist;
wobei a + b ≥ 150 ist; bevorzugt 2 000 ≥ a + b ≥ 150 ist;
wobei das Organopolysiloxan **A** wenigstens 2 Gruppen E mit kationisch polymerisierbarer und/oder vernetzbarer Funktion aufweist, und
wobei das Organopolysiloxan **A** einen molaren Gehalt an kationisch polymerisierbarer und/oder vernetzbarer Funktion von kleiner gleich 18 mmol/100g Organopolysiloxan **A,** bevorzugt von kleiner gleich 15 mmol/100g aufweist;
b. gegebenenfalls wenigstens ein lineares Organopolysiloxan **B** der allgemeinen Formel (I) wobei
a + b ≤ 100; bevorzugt 1 ≤ a + b ≤ 100;
wobei das Organopolysiloxan **B** wenigstens 2 kationisch polymerisierbare und/oder vernetzbare Gruppen E aufweist, bevorzugt eine Epoxy- oder Vinyloxyfunktion, und
wobei das Organopolysiloxan **B** einen molaren Gehalt an kationisch polymerisierbarer und/oder vernetzbarer Funktion von wenigstens 20 mmol/100g Organopolysiloxan **B** aufweist;
c. wenigstens einen kationischen Photoinitiator **C;**
d. gegebenenfalls einen Füllstoff **D,**
e. gegebenenfalls einen Photosensibilisator **E** und
f. gegebenenfalls einen Photoabsorber **F,**
ii. selektives Bestrahlen wenigstens eines Teils der photovernetzbaren Silikonzusammensetzung **Y** mittels der Strahlungsquelle, um einen Teil des Silikonelastomerartikels zu bilden; und
iii. Wiederholen des Schritts ii) so oft, bis der Silikonelastomerartikel hergestellt ist.

2. Additives Herstellungsverfahren zur Herstellung eines Silikonelastomerartikels nach Anspruch 1, **dadurch gekennzeichnet, dass** die photovernetzbare Silikonzusammensetzung **Y** wenigstens 75 Gew.-% Organopolysiloxan **A** umfasst.

3. Additives Herstellungsverfahren zur Herstellung eines Silikonelastomerartikels nach einem der vorhergehenden Ansprüche, **dadurch gekennzeichnet, dass** das Organopolysiloxan **A** ein Organopolysiloxan der Formel (I) ist, wobei a=0 ist.

4. Additives Herstellungsverfahren zur Herstellung eines Silikonelastomerartikels nach einem der vorhergehenden Ansprüche, **dadurch gekennzeichnet, dass** die photovernetzbare Silikonzusammensetzung **Y** zwischen 1 und 20 Gew.-% des Organopolysiloxans **B** umfasst.

5. Additives Herstellungsverfahren zur Herstellung eines Silikonelastomerartikels nach einem der vorhergehenden Ansprüche, **dadurch gekennzeichnet, dass** die kationisch polymerisierbare und/oder vernetzbare Funktion der Gruppe E eine Epoxygruppe ist und bevorzugt die Gruppen E des Organopolysiloxans **A** und/oder des Organopolysiloxans **B** aus den folgenden Gruppen gewählt sind: 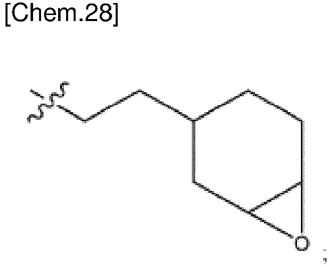 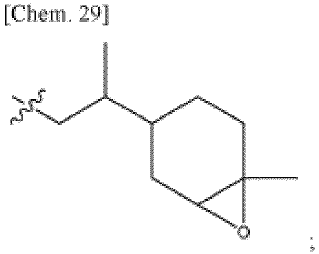 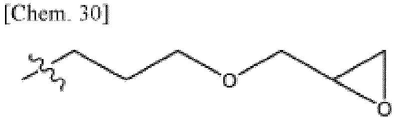 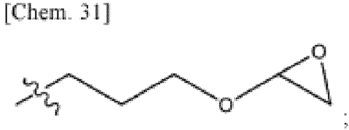 et

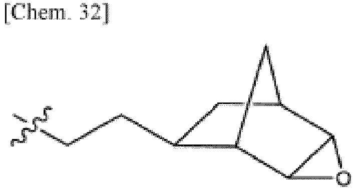

6. Additives Herstellungsverfahren zur Herstellung eines Silikonelastomerartikels nach einem der vorhergehenden Ansprüche, **dadurch gekennzeichnet, dass** die Menge an kationischem Photoinitiator **C** zwischen 0,05 und 10 Gew.-%, bevorzugt zwischen 0,1 und 5 Gew.-%, und stärker bevorzugt zwischen 0,15 und 3 Gew.-% der photovernetzbaren Silikonzusammensetzung **Y** beträgt.

7. Additives Herstellungsverfahren zur Herstellung eines Silikonelastomerartikels nach einem der vorhergehenden Ansprüche, **dadurch gekennzeichnet, dass** die photovernetzbare Silikonzusammensetzung **Y** zwischen 0,1 und 15 Gew.-% eines Füllstoffs **D** enthält, und bevorzugt der Füllstoff **D** aus der Gruppe gewählt ist, die aus siliciumhaltigen Materialien besteht.

8. Additives Herstellungsverfahren zur Herstellung eines Silikonelastomerartikels nach einem der vorhergehenden Ansprüche, **dadurch gekennzeichnet, dass** die Strahlungsquelle eine LED-Lampe ist, bevorzugt eine LED-Lampe mit einer Wellenlänge von 355, 365, 385 oder 405 nm.

9. Photovernetzbare Silikonzusammensetzung **Y',** umfassend:
a. wenigstens 75 Gew.-% eines linearen Organopolysiloxans **A' der** allgemeinen Formel (I) 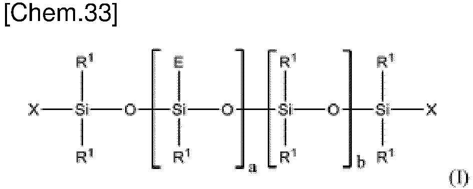
wobei jede Gruppe R¹ unabhängig voneinander ein einwertiger Rest mit 1 bis 30 Kohlenstoffatomen ist, bevorzugt gewählt aus Alkylfunktionen mit 1 bis 8 Kohlenstoffatomen und Arylfunktionen mit 6 bis 12 Kohlenstoffatomen, und stärker bevorzugt aus Methyl-, Ethyl-, Propyl-, 3,3,3-Trifluorpropyl-, Xylyl-, Tolyl- und Phenylgruppen;
wobei E eine Gruppe ist, die eine kationisch polymerisierbare und/oder vernetzbare Funktion umfasst, bevorzugt eine Epoxy- oder Vinyloxyfunktion, wobei die kationisch polymerisierbare und/oder vernetzbare Funktion über einen zweiwertigen Rest mit 2 bis 20 Kohlenstoffatomen und gegebenenfalls 1 oder mehreren Heteroatomen, bevorzugt Sauerstoff, an ein Siliciumatom gebunden ist;
wobei jede Gruppe X unabhängig R¹ oder E ist;
wobei a + b ≥ 200 ist; bevorzugt 2 000 ≥ a + b ≥ 200 ist;
wobei das Organopolysiloxan **A'** wenigstens 2 Gruppen E mit kationisch polymerisierbarer und/oder vernetzbarer Funktion aufweist, und wobei das Organopolysiloxan **A'** einen molaren Gehalt an kationisch polymerisierbarer und/oder vernetzbarer Funktion von kleiner gleich 18 mmol/100g Organopolysiloxan **A',** bevorzugt kleiner gleich 15 mmol/100g, aufweist;
b. zwischen 1 und 20 Gew.-% eines linearen Organopolysiloxans **B' der** allgemeinen Formel (I) wobei
a + b ≤ 150 ist; bevorzugt 1 ≤ a + b ≤ 100;
wobei das Organopolysiloxan **B'** wenigstens 2 kationisch polymerisierbare und/oder vernetzbare E-Gruppen aufweist, bevorzugt eine Epoxy- oder Vinyloxyfunktion aufweist, und
das Organopolysiloxan **B'** einen molaren Gehalt an kationisch polymerisierbarer und/oder vernetzbarer Funktion von wenigstens 20 mmol/100g Organopolysiloxan **B'** aufweist; und
c. wenigstens einen kationischen Photoinitiator C;

10. Photovernetzbare Silikonzusammensetzung **Y'** nach Anspruch 9, **dadurch gekennzeichnet, dass** das Organopolysiloxan **A'** ein Organopolysiloxan der Formel (I) ist, wobei a=0.

11. Photovernetzbare Silikonzusammensetzung **Y'** nach einem der Ansprüche 9 bis 10, **dadurch gekennzeichnet, dass** die kationisch polymerisierbare und/oder vernetzbare Funktion der Gruppe E eine Epoxyfunktion ist und bevorzugt die Gruppen E des Organopolysiloxans **A'** und/oder des Organopolysiloxans **B' aus** den folgenden Gruppen gewählt sind: 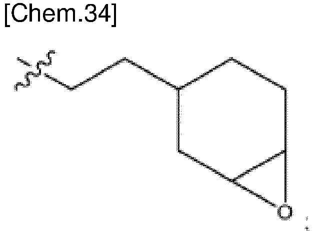 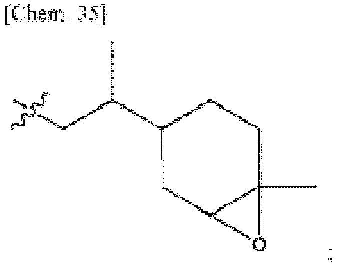 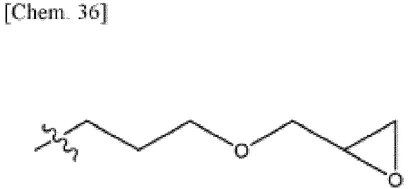 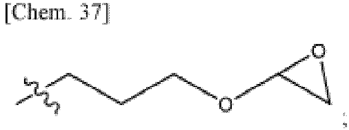 et

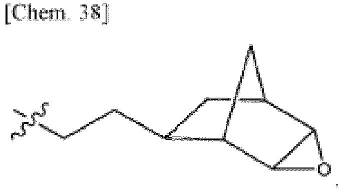

12. Photovernetzbare Silikonzusammensetzung **Y'** nach einem der Ansprüche 9 bis 11, **dadurch gekennzeichnet, dass** die Menge an kationischem Photoinitiator **C** zwischen 0,05 und 10 Gew.-%, bevorzugt zwischen 0,1 und 5 Gew.-% und stärker bevorzugt zwischen 0,15 und 3 Gew.-% liegt.

13. Photovernetzbare Silikonzusammensetzung **Y'** nach einem der Ansprüche 9 bis 12, **dadurch gekennzeichnet, dass** sie ferner zwischen 0,1 und 15 Gew.-% eines Füllstoffs **D** enthält, wobei der Füllstoff **D** bevorzugt aus der Gruppe gewählt ist, die aus siliciumhaltigen Stoffen besteht.

14. Verwendung einer photovernetzbaren Silikonzusammensetzung **Y'** nach einem der Ansprüche 9 bis 13 zur Herstellung eines Silikonelastomerartikels.

15. Silikonelastomer, welches durch Vernetzung einer photovernetzbaren Silikonzusammensetzung **Y'** nach einem der Ansprüche 9 bis 13 erhalten wird.

## Claims

1. Additive manufacturing method of photopolymerization in a tank for producing a silicone elastomer item, said method including the following steps:
i. Implementing a photocrosslinkable silicone composition **Y** and an irradiation source, said photocrosslinkable silicone composition **Y** comprising:
a. At least one linear organopolysiloxane **A** with the general formula (I) 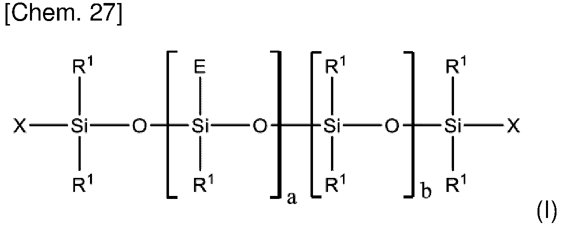
wherein each group R¹ is independently a monovalent radical comprising from 1 to 30 carbon atoms, preferably selected from alkyls having 1 to 8 carbon atoms and aryls having 6 to 12 carbon atoms, and more preferably from the methyl, ethyl, propyl, 3,3,3-trifluoropropyl, xylyl, tolyl and phenyl groups;
E is a group comprising a cationically polymerizable and/or crosslinkable function, preferably an epoxy or vinyloxy function, wherein the cationically polymerizable and/or crosslinkable function is linked to a silicon atom via a divalent radical comprising from 2 to 20 carbon atoms and optionally 1 or several heteroatoms, preferably oxygen;
each group X is independently R¹ or E;
a + b ≥ 150; preferably 2 000 ≥ a + b ≥ 150 ;
said organopolysiloxane **A** having at least 2 groups E with a function which can be cationically polymerized and/or crosslinked, and
said organopolysiloxane **A** having a molar content in cationically polymerizable and/or crosslinkable function of less than or equal to 18 mmol/100 g of organopolysiloxane **A** , preferably less than or equal to 15 mmol/100 g;
b. Optionally at least one linear organopolysiloxane **B** with the general formula (I) wherein
a + b ≤100; preferably 1 ≤ a + b ≤ 100;
said organopolysiloxane **B** having at least 2 groups E with a function which can be cationically polymerized and/or crosslinked, preferably an epoxy or vinyloxy function , and
said organopolysiloxane **B** having a molar content in cationically polymerizable and/or crosslinkable function of greater than or equal to 20 mmol/100 g of organopolysiloxane **B;**
c. At least one cationic photoinitiator **C;**
d. Optionally, a filler **D,**
e. Optionally a photosensitizer **E,** and
f. Optionally a photoabsorber **F,**
ii. Selectively irradiating at least a portion of the photocrosslinkable silicone composition **Y** using the irradiation source to form a portion of the silicone elastomer item; and
iii. Repeating step ii) a sufficient number of times to produce the silicone elastomer item.

2. Additive manufacturing method for producing a silicone elastomer item according to claim 1, **characterized in that** the photocrosslinkable silicone composition Y comprises at least 75% by weight of organopolysiloxane **A.**

3. Additive manufacturing method for producing a silicone elastomer item according to one of the preceding claims, **characterized in that** the organopolysiloxane **A** is an organopolysiloxane with the formula (I) where a = 0.

4. Additive manufacturing method for producing a silicone elastomer item according to one of the preceding claims, **characterized in that** the photocrosslinkable silicone composition **Y** comprises between 1 and 20% by weight of the organopolysiloxane **B.**

5. Additive manufacturing method for producing a silicone elastomer item according to one of the preceding claims, **characterized in that** the cationically polymerizable and/or crosslinkable function of group E is an epoxy function, and preferably, the groups E of the organopolysiloxane **A** and/or organopolysiloxane **B** are selected from the following groups: 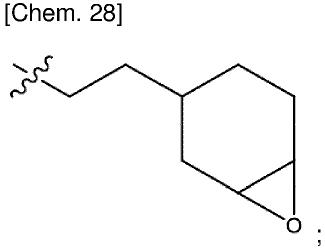 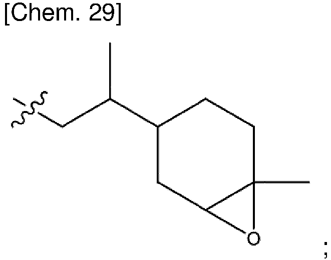 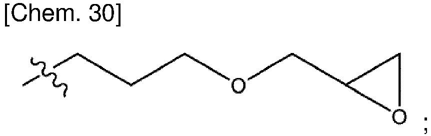 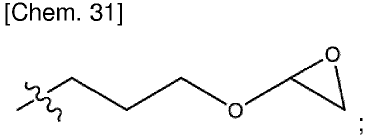 and

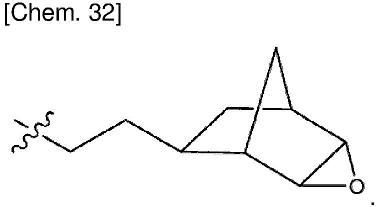

6. Additive manufacturing method for producing a silicone elastomer item according to one of the preceding claims, **characterized in that** the amount of cationic photoinitiator C is between 0.05 and 10% by weight, preferably between 0.1 and 5% by weight, and even more preferably between 0.15 and 3% by weight of the photocrosslinkable silicone composition **Y.**

7. Additive manufacturing method for producing a silicone elastomer item according to one of the preceding claims, **characterized in that** the photocrosslinkable silicone composition **Y** comprises between 0.1 and 15% by weight of a filler **D,** and preferably, the filler **D** is selected from the group consisting of siliceous materials.

8. Additive manufacturing method for producing a silicone elastomer item according to one of the preceding claims **characterized in that** the irradiation source is an LED lamp, preferably an LED lamp having a wavelength of 355, 365, 385 or 405 nm.

9. Photocrosslinkable silicone composition **Y'** including:
a. At least 75% in weight of a linear organopolysiloxane **A'** with the general formula (I) 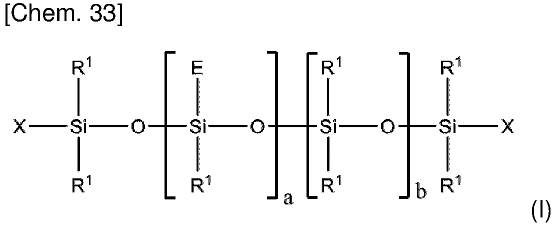
wherein each group R¹ is independently a monovalent radical comprising from 1 to 30 carbon atoms, preferably selected from alkyls having 1 to 8 carbon atoms and aryls having 6 to 12 carbon atoms, and more preferably from the methyl, ethyl, propyl, 3,3,3-trifluoropropyl, xylyl, tolyl and phenyl groups;
E is a group comprising a cationically polymerizable and/or crosslinkable function, preferably an epoxy or vinyloxy function, wherein the cationically polymerizable and/or crosslinkable function is linked to a silicon atom via a divalent radical comprising from 2 to 20 carbon atoms and optionally 1 or several heteroatoms, preferably oxygen;
each group X is independently R¹ or E;
a + b ≥ 200; preferably 2 000 ≥ a + b ≥ 200 ;
said organopolysiloxane **A'** having at least 2 groups E with a function which can be cationically polymerized and/or crosslinked, and
said organopolysiloxane **A'** having a molar content in cationically polymerizable and/or crosslinkable function of less than or equal to 18 mmol/100 g of organopolysiloxane **A'** , preferably less than or equal to 15 mmol/100 g;
b. Between 1 and 20% in weight of a linear organopolysiloxane **B'** with the general formula (I) wherein
a + b ≤150; preferably 1 ≤ a + b ≤ 100;
said organopolysiloxane **B'** having at least 2 groups E with a function which can be cationically polymerized and/or crosslinked, preferably an epoxy or vinyloxy function, and
said organopolysiloxane **B'** having a molar content in cationically polymerizable and/or crosslinkable function of greater than or equal to 20 mmol/100 g of organopolysiloxane **B';** and
c. At least one cationic photoinitiator **C;**

10. Photocrosslinkable silicone composition **Y'** according to claim 9, **characterized in that** the organopolysiloxane **A'** is an organopolysiloxane with the formula (I) where a = 0.

11. Photocrosslinkable silicone composition **Y'** according to one of claims 9 to 10, **characterized in that** the cationically polymerizable and/or crosslinkable function of group E is an epoxy function, and preferably, the groups E of the organopolysiloxane **A'** and/or organopolysiloxane **B'** are selected from the following groups: 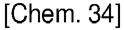 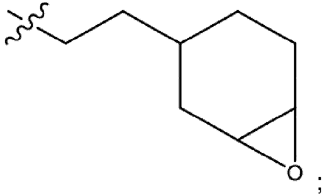 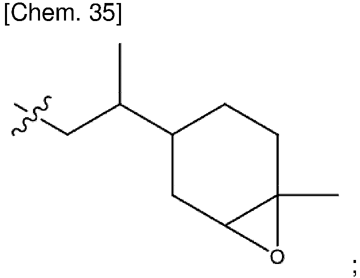 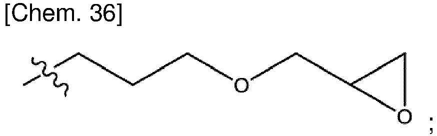 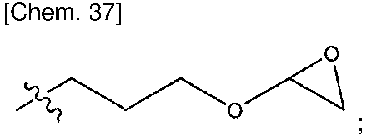 and

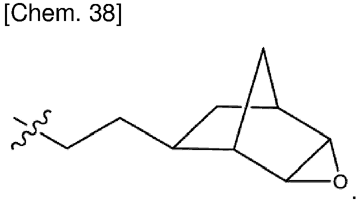

12. Photocrosslinkable silicone composition **Y'** according to one of claims 9 to 11, **characterized in that** the amount of the cationic photoinitiator **C** is between 0.05 and 10% by weight, preferably between 0.1 and 5% by weight, and more preferably between 0.15 and 3% by weight.

13. Photocrosslinkable silicone composition **Y'** according to one of claims 9 to 12, **characterized in that** it further comprises between 0.1 and 15% by weight of a filler **D,** and preferably, the filler **D** is selected from the group constituted by siliceous materials.

14. Use of a photocrosslinkable silicone composition **Y'** according to one of claims 9 to 13 to manufacture an item made of silicone elastomer.

15. Silicone elastomer obtained by crosslinking a photocrosslinkable silicone composition **Y'** according to one of claims 9 to 13.
